# EUROPEAN PATENT APPLICATION

(11) **EP 2 184 707 A1**
(43) Date of publication of application: **12.05.2010**
(21) Application number: 08169756.7
(22) Date of filing: 23.10.2001
(51) Int. Cl.: G06Q 10/00

(54) **System and method of attracting and lodging PCT National phase applications**

(30) Priority: 23.10.2000 AU PR092601; 21.09.2001 AU PR781101
(62) Divisional of application: 01980051.5
(71) Applicant: Inovia Holdings Pty Ltd., Sydney New South Wales 2000 (AU)
(72) Inventor: Simpson, Justin Ryan, Sydney, NSW 2000 (AU)
(74) Representative: Maggs, Michael Norman

(57) **Abstract**

A computer implemented system and method of attracting and lodging PCT national phase patent applications. The computer system for lodging a PCT national phase application with a patent office has an interface which is adapted to receive a national phase filing instruction. The interface is in communication with a document generator which is adapted to generate a national phase entry message. The generator is in communication with a document sender which is adapted to send the national phase entry message to the patent office. When the interface receives a national phase filing instruction the document generator generates the national phase entry message and the document sender sends the message to the patent office thereby lodging the PCT national phase application.

## Description

### FIELD OF THE INVENTION

The present invention relates to methods of lodging PCT national phase patent applications and, in particular to a computer implemented system and method of attracting and lodging such applications.

The invention has been developed primarily for use with PCT applications and will be described hereinafter with reference to this application. However, it will be appreciated that the invention is not limited to this particular field of use.

### PRIOR ART

Currently, instructing attorneys ask local attorneys to file national phase PCT applications by sending them a fax or letter which includes the application number, title, applicant's name, address and other information needed to file the application. Once the local attorney receives that letter, they read that information, enter it into their computer system. They then write or type a national phase filing message addressed to their local patent office, calculate the necessary filing fees and manually file the application with the patent office. This current method has a number of disadvantages.

Firstly, the local attorney has no means for pro-actively attracting the business of the instructing attorney, except by meeting them personally, perhaps at a conference, and forming a relationship with them. The local attorney has no means of knowing which PCT applications the instructing attorney is looking after and has no means of attracting those particular applications.

Secondly, once the instructing attorney has produced a filing instruction letter and sent it via fax or post to the local attorney, the local attorney then has to enter all the details into their computer system. This is not only time consuming, but it also leads to errors in data entry.

Thirdly, the instructing attorney must perform a number of steps in order to produce the filing instruction letter before they can send it to the appropriate local attorney. This can be a time consuming task, particularly if a number of national phase applications need to be filed.

Fourthly, once the local attorney has filed the application, they usually then have to prepare particular formal documents and send them to the instructing attorney to be completed or signed. This is also a time-consuming task.

It is therefore an object of the present invention to overcome or ameliorate at least some of the disadvantages of the prior art, or to provide a useful alternative.

Any reference to "comprise", "comprises" or "comprising" in this document is intended to mean the inclusion of an integer or steps but not the exclusion of any integers or steps.

Any reference to "database" in this document is intended to mean any collection of computer readable records or files stored in or on any form of computer readable media.

Any reference to prior art does not amount to an admission that that prior art forms part of the common general knowledge.

### THE INVENTION

According to a *first* aspect of the present invention there is disclosed a method of lodging a PCT national phase patent application with a patent office, the method comprising the steps of:
(a) receiving a national phase filing instruction which:
   (i) identifies a PCT application; and
   (ii) nominates a prosecuting attorney firm;
(b) generating a national phase entry message which:
   (i) identifies the PCT application; and
   (ii) is addresses to the patent office;
(c) generating an instructing message which;
   (i) identifies the PCT application; and
   (ii) is addresses to the prosecuting attorney firm;
(d) sending the national phase entry message to the patent office, thereby lodging the PCT national phase application; and
(e) sending the instructing message to the prosecuting attorney firm.

Preferably, the national phase entry message includes a request that the PCT application enter the national phase.

Preferably, the instructing message advises the prosecuting attorney firm that the PCT application has entered the national phase and asks the firm to continue the national phase prosecution of that PCT application.

Preferably, the steps of sending the national phase entry message to the patent office and sending the instructing message to the prosecuting attorney firm comprises sending the messages by one or more of:
(i) fax;
(ii) email;
(iii) EDI transfer;
(iv) courier;
(v) ordinary post; and
(vi) hand delivery.

According to a *second* aspect of the present invention there is disclosed a computer system for lodging a PCT national phase application with a patent office comprising:
(a) an interface adapted to receive a national phase filing instruction, in communication with;
(b) a document generator adapted to generate a national phase entry message, in communication with;
(c) a document sender adapted to send the national phase entry message to the patent office;
wherein, when the interface receives a national phase filing instruction the document generator generates the national phase entry message and the document sender sends the message to the patent office thereby lodging the PCT national phase application.

Preferably, the interface comprises one or more of:
(a) PCT application identifier receiving means adapted to receive a PCT application identifier;
(b) country/region selection means adapted to receive one or more country/region selections;
(c) prosecuting attorney selection means adapted to receive one or more prosecuting attorney selections; and
(d) instructing attorney information receiving means adapted to receive instructing attorney information;
and the national phase filing instruction comprises one or more of:
(a) a PCT application identifier;
(b) one or more country/region selections;
(c) one or more prosecuting attorney selections; and
(d) instructing attorney information.

Preferably, the PCT application identifier comprises one or more of:
(a) a PCT application number; and
(b) a WIPO publication number.

Preferably, the one or more country/region selections comprise the selection of any PCT country or region.

Preferably, the prosecuting attorney selections include the selection of any prosecuting attorney firm or prosecuting attorney qualified to prosecute patent applications before a patent office.

Preferably, each country/region selection means has a corresponding prosecuting attorney selection means.

Preferably, the instructing attorney information comprises one or more of:
(i) an instructing attorney first name;
(ii) an instructing attorney last name;
(iii) an instructing attorney firm name;
(iv) an instructing attorney email address; and
(v) an instructing attorney reference.

Preferably, the receiving means and the selection means comprise one or more of:
(i) a selectable check box;
(ii) a selectable radio button;
(iii) an editable text field;
(iv) a selectable drop down box; and
(v) a selectable icon.

Preferably, the document generator is also adapted to generate:
(a) an instructing message addressed to the prosecuting attorney firm;
(b) a confirmation message addressed to the instructing attorney;
(c) a document request message addressed to the patent office; and
(d) an invoice addressed to the instructing attorney.

Preferably, the instructing message advises the prosecuting attorney firm that the PCT application has entered the national phase and asks the firm to continue the national phase prosecution of that PCT application.

Preferably, the confirmation message advises the instructing attorney that the PCT application has entered the national phase.

Preferably, the document request message asks the patent office to send a copy of the PCT application's published specification and International Preliminary Examination Report (IPER) to the prosecuting attorney.

Preferably, the invoice charges the instructing attorney a flat service fee for lodging the PCT national phase application.

Preferably, the national phase entry message includes a request that the PCT application enter the national phase.

Preferably, the patent office has one or more of:
(a) an email address; and
(b) a fax number
and the document sender sends the national phase entry message and the document request message to the patent office by one or more of:
(a) emailing the message to the email address; and
(b) faxing the message to the fax number.

Preferably, the prosecuting attorney firm and the instructing attorney each have one or more of:
(a) an email address; and
(b) a fax number
and wherein the document sender sends the instructing message to the prosecuting attorney firm and the confirmation message and invoice to the instructing attorney by one or more of:
(a) emailing the message to the email address; and
(b) faxing the message to the fax number.

Preferably, the document sender comprises one or more of:
(a) an email sending computer program; and
(b) a fax sending computer program.

Preferably, the document generator is in communication with a document template database which stores:
(a) a national phase entry message template;
(b) an instructing message template;
(c) a confirmation message template;
(d) a document request message template; and
(e) an invoice template
and wherein the document generator generates the messages and invoices by:
(a) identifying the relevant message/invoice template in the template database;
(b) generating a new message/invoice resembling the message/invoice template; and
(b) inserting information specific to the PCT application into the new message/invoice.

According to a *third* aspect of the present invention there is disclosed a interface for receiving PCT national phase filing instructions, the national phase filing instructions comprising one or more of:
(a) a PCT application identifier;
(b) one or more country/region selections;
(c) one or more prosecuting attorney selections; and
(d) instructing attorney information
and the interface comprising one or more of:
(a) PCT application identifier receiving means adapted to receive the PCT application identifier;
(b) country/region selection means adapted to receive the country/region selection(s);
(c) prosecuting attorney selection means adapted to receive the prosecuting attorney selection(s); and
(d) instructing attorney information receiving means adapted to receive the instructing attorney information.

Preferably, when the interface receives a national phase filing instruction it instructs a document generator to generate a national phase filing message.

According to a *fourth* aspect of the present invention there is disclosed a document generator adapted to generate one or more of:
(a) a national phase entry message addressed to a patent office;
(b) an instructing message addressed to a prosecuting attorney firm;
(c) a confirmation message addressed to an instructing attorney;
(d) a document request message addressed to a patent office; and
(e) an invoice addressed to an instructing attorney.

Preferably, the document generator is adapted to generate the messages/invoices in response to an instruction received from an interface adapted to receive national phase filing instructions.

Preferably, the document generator is adapted to generate the messages/invoices in response to an email received from an instructing attorney.

Preferably, when the generator generates a national phase entry message it instructs a document sender to send the national phase entry message to a patent office.

According to a *fifth* aspect of the present invention there is disclosed a document sender adapted to send one or more of:
(a) a national phase entry message to a patent office;
(b) an instructing message to a prosecuting attorney firm;
(c) a confirmation message to an instructing attorney;
(d) a document request message to a patent office; and
(e) an invoice to an instructing attorney
by one or more of:
(a) email; and
(b) fax.

Preferably, the document sender is adapted to send the messages/invoices in response to an instruction received from a document generator adapted to generate such messages/invoices.

According to a *sixth* aspect of the present invention there is disclosed a computer system for sending a PCT national phase filing invitation to an instructing attorney comprising:
(a) a database searcher adapted to search:
   (i) a PCT application database which stores information about a plurality of PCT applications, each application having a corresponding instructing attorney;
   (ii) an attorney database which stores information about a plurality of instructing attorneys, each attorney having a corresponding address;
(b) a document generator in communication with the database searcher and adapted to generate a national phase filing invitation;
(c) a document sender in communication with the document generator and adapted to send the national filing invitation to the instructing attorney;
wherein, the database searcher:
(a) searches the PCT application database to identify a selected PCT application which is due to enter the national phase within a predetermined number of weeks;
(b) searches the PCT application database to identify the selected PCT applications' corresponding instructing attorney; and
(c) searches the attorney database to identify the corresponding instructing attorney's address;
whereupon the document generator generates a national phase filing invitation which identifies the selected PCT application and the document sender sends the national phase filing invitation to the corresponding instructing attorney's address.

Preferably, the invitation invites the instructing attorney to cause the PCT application to enter the national phase via a computer system for lodging national phase applications.

Preferably, the invitation invites the instructing attorney to cause the PCT application to enter the national phase via an interface for receiving PCT national phase filing instructions.

Preferably, the corresponding instructing attorney's address is:
(a) an email address; or
(b) a fax number
and the document sender sends the national phase filing invitation to the instructing attorney by one of:
(a) emailing the invitation to the email address; and
(b) faxing the invitation to the fax number.

Preferably, the document sender comprises one or more of:
(a) an email sending computer program; and
(b) a fax sending computer program.

Preferably, the document generator is in communication with a document template database which stores a national phase filing invitation template and wherein the document generator generates the national phase filing invitation by:
(a) identifying the invitation template in the template database;
(b) generating a new invitation resembling the invitation template; and
(c) inserting information specific to the selected PCT application into the new invitation.

Preferably, the predetermined number of weeks is between 0 weeks and 12 weeks. More preferably, the predetermined number of weeks is between 3 weeks and 6 weeks.

According to a *seventh* aspect of the present invention there is disclosed database searcher for use in identifying a selected PCT application which is due to enter the national phase within a predetermined number of weeks, the searcher being adapted to search:
(a) a PCT application database which stores information about a plurality of PCT applications, each application having a corresponding instructing attorney; and
(b) an attorney database which stores information about a plurality of instructing attorneys, each attorney having a corresponding address
wherein, in use, the database searcher
(a) searches the PCT application database to identify the selected PCT application which is due to enter the national phase within the predetermined number of weeks;
(b) searches the PCT application database to identify the selected PCT applications' corresponding instructing attorney; and
(c) searches the attorney database to identify the corresponding instructing attorney's address.

Preferably, once the searcher identifies the selected PCT application which is due to enter the national phase within the predetermined number of weeks it instructs a document generator to generate a national phase filing invitation which:
(i) identifies the selected PCT application; and
(ii) is addressed to the instructing attorney.

According to an *eighth* aspect of the present invention there is disclosed document generator for generating national phase filing invitations, wherein the document generator is in communication with a document template database which stores a national phase filing invitation template and wherein the document generator generates the national phase filing invitation by:
(a) identifying the invitation template in the template database;
(b) generating a new invitation resembling the invitation template; and
(c) inserting information specific to the selected PCT application into the new invitation.

Preferably, the document generator is adapted to generate the invitation in response to an instruction received from a database searcher adapted to search a PCT application database and an attorney database.

Preferably, once the generator generates a national phase filing invitation it instructs a document sender to send the invitation to an instructing attorney.

According to a *ninth* aspect of the present invention there is disclosed a document sender for sending national phase filing invitations to instructing attorneys, the sender being adapted to send the invitations to the instructing attorneys by one or more of:
(a) email; and
(b) fax.

Preferably, the document sender is adapted to send the invitation in response to an instruction received from a document generator adapted to generate such invitations.

According to a *tenth* aspect of the present invention there is disclosed a method of identifying and attracting a potential PCT national phase application using a PCT application database and an attorney database;
wherein the PCT application database includes a plurality of PCT application records, each PCT record including a priority date, a PCT application number and a PCT attorney name;
wherein the attorney database includes a plurality of attorney records, each attorney record including an attorney name and an attorney address;
and wherein the method includes the steps of:
(a) searching the PCT application database on a current date and:
   (i) identifying a selected PCT record having a priority date which is less than 31 months prior to the current date;
   (ii) identifying the PCT application number which corresponds to the selected PCT record as a selected PCT application number;
   (iii) identifying the PCT attorney name which corresponds to the selected PCT record as a selected PCT attorney name;
(b) searching the attorney database and:
   (i) identifying a selected attorney record having an attorney name which matches the selected PCT attorney name; and
   (ii) identifying the attorney address which corresponds to the selected attorney record as a selected attorney address;
(c) generating a national phase filing invitation; and
(d) sending the invitation to the selected attorney address.

Preferably, the invitation includes the selected PCT application number.

Preferably, the attorney address includes a selected email address and the step of sending the invitation to the selected attorney address includes sending an email to the selected email address.

Preferably, the invitation includes one or more of:
(a) the PCT application number of the selected PCT record;
(b) a national phase entry due date corresponding to the selected PCT record;
(c) response information; or
(d) a link to a national phase lodgment website.

Preferably, the priority date of the selected PCT record is between 18 and 31 months prior to the current date.

Preferably, the step of generating the national phase filing invitation includes using an invitation template, the template including an invitation address region, an invitation subject region, an invitation body and standard text, and the method includes the steps of:
(a) identifying the invitation template;
(b) generating a new national phase filing invitation resembling the template;
(c) inserting the selected attorney address in the new invitation's address region;
(d) inserting the selected PCT application number in one or more of the new invitation's:
   (i) subject region; or
   (ii) body
(e) calculating a national phase entry due date from the selected PCT record's priority date; and
(f) inserting the due date in one or more of the new invitation's:
   (i) subject region; or
   (ii) body.

Preferably, the new invitation includes one or more of:
(a) a link to a national phase lodgment website;
(b) user name information; and
(c) password information.

Preferably, the user name is the selected PCT application number.

Preferably, the password is the selected attorney email address.

According to a *eleventh* aspect of the present invention there is disclosed a method of receiving a PCT national phase application filing instruction by email including the steps of:
(a) receiving an invitation reply to a national phase filing invitation;
(b) confirming that the reply is a filing instruction;
(c) identifying a selected PCT application number corresponding to the reply;
(d) generating a national phase entry message corresponding to the selected PCT application number; and
(e) forwarding the national phase entry message to the local patent office.

According to a *twelfth* aspect of the present invention there is disclosed a method of receiving a PCT national phase application filing instruction via a national phase lodgment website;
wherein the website includes a PCT application identifier receiving field and a filing instruction confirmer and is in communication with a PCT application database;
wherein the PCT application database includes a plurality of PCT application records, each PCT record including a PCT application identifier, applicant information and an invention title;
and wherein the method includes the steps of:
(a) receiving a particular PCT application identifier from an instructing attorney via the PCT application identifier receiving field;
(b) searching the PCT application database;
(c) identifying the particular PCT record corresponding to the particular PCT application identifier;
(d) displaying at least part of the particular PCT record on the website; and
(e) receiving a particular PCT national phase application filing instruction via the filing instruction confirmer.

Preferably, the step of receiving the particular PCT application identifier from the instructing attorney via the PCT application identifier receiving field includes the additional step of confirming the identity of the instructing attorney. More preferably, the step of confirming the identity of the instructing attorney includes receiving security information from the attorney via a login screen.

Preferably, the method includes the further step of receiving additional application information from the instructing attorney. More preferably, the additional application information includes information relating to the number of pages of a particular complete specification which corresponds to the particular PCT application.

Preferably, the method includes the further step of displaying cost information via the national phase lodgment website. Preferably, the cost information includes information relating to one or more of:
(a) Service charges for filing the PCT national phase application;
(b) National Phase government filing fees; and
(c) Government fees for additional specification pages or claims above a predetermined page number or claim number.

Preferably, the website is in communication with an attorney database which includes a plurality of attorney records, each attorney record including an attorney name and attorney address information, and wherein the method includes the further steps of:
(a) searching the attorney database to identify the attorney record corresponding to the instructing attorney
(b) displaying at least part of the instructing attorney record on the website; and
(c) receiving confirmation or denial of the accuracy of the instructing attorney record from the instructing attorney.

Preferably, the step of receiving the denial of the accuracy of the instructing attorney record is followed by the step of providing a record amendment screen adapted for amending the instructing attorney record stored in the attorney database.

According to a *thirteenth* aspect of the present invention there is disclosed a method of automatically filing a particular PCT national phase application with a patent office using a national phase entry message template, the application having a particular PCT application identifier, the template including an identifier insertion point, and the method including the steps of:
(a) receiving an electronic filing instruction which includes the particular PCT application identifier;
(b) generating a new national phase entry message resembling the national phase entry message template;
(c) inserting the particular PCT application identifier in the insertion point of the new national phase entry message; and
(d) forwarding the message to the patent office.

Preferably, the template and the new national phase entry message further includes additional filing information. More preferably, the additional filing information includes one or more of:
(a) an address for service;
(b) a date; and
(c) a filing attorney signature.

Preferably, the method is performed using a PCT application database which includes a plurality of PCT application records, each PCT record including a PCT application identifier, applicant information and an invention title, such that the step of receiving the electronic filing instruction is followed by the step of searching the PCT application database to identify the particular PCT record corresponding to the particular PCT application identifier. More preferably, the template further includes an applicant information insertion point and an invention title insertion point and the step of generating the new national phase entry message is followed by the additional steps of:
(a) inserting the particular applicant information in the applicant information insertion point of the new national phase entry message; and
(b) inserting the particular invention title in the invention title insertion point of the new national phase entry message.

Preferably, the step of forwarding the message to the patent office includes forwarding the message by one or more of:
(a) email;
(b) facsimile;
(c) EDI transfer; or
(d) post.

Preferably, the electronic filing instruction is received from an instructing attorney and the step of forwarding the new national phase entry message to the patent office is followed by the step of forwarding a filing confirmation message to the instructing attorney. Preferably, the filing confirmation message resembles a filing confirmation message template and includes one or more of:
(a) the particular PCT application identifier;
(b) the particular applicant information; and
(c) the particular invention title.

Preferably, the new national phase entry message is forwarded to the patent office on a filing date. More preferably, the filing confirmation message also includes the filing date.

Preferably, the new national phase entry message is in the form of a letter. Alternatively, the message is in the form of an email. Alternatively again, the message is in an electronic form particularly suited to the patent office.

Preferably, the step of receiving the electronic filing instruction includes receiving the instruction in the form of:
(a) an email;
(b) a fax;
(c) a command received via the website; or
(d) an ordinary letter.

According to a *fourteenth* aspect of the present invention there is disclosed a method of generating a notice of entitlement form relating to a particular PCT national phase application using
(a) an instruction receiving interface,
(b) a PCT application database, and
(c) a notice of entitlement form template,
wherein the interface includes an initiator and a phrase having a plurality of corresponding selectable response check boxes adjacent thereto, each check box having a corresponding response text,
wherein the PCT application database includes a particular PCT application record including a particular PCT application identifier, a particular applicant name and a particular applicant address,
wherein the notice of entitlement form template includes standard text, database retrieved information insertion points and response text insertion points,
and wherein the method includes the steps of:
(a) displaying the instruction receiving interface;
(b) receiving an attorney supplied selection of one of the selectable response check boxes;
(c) generating a new notice of entitlement form resembling the notice of entitlement form template;
(d) inserting the particular PCT application identifier, the particular applicant name and the particular applicant address in the database retrieved information insertion points; and
(e) inserting the response text corresponding to the selected check box in the response text insertion point to produce a new notice of entitlement form.

Preferably, the attorney supplied selection of one of the selectable response check boxes is supplied by an instructing attorney and the method further includes the step of forwarding the new notice of entitlement form to the instructing attorney. More preferably, the step of forwarding the new notice of entitlement form to the instructing attorney includes forwarding the form as an attachment to an email addressed to the attorney.

Preferably, the phrase also has a corresponding additional information entry field.

Preferably, the initiator is a button marked with one or more of:
(a) "continue"
(b) "go"; or
(c) "generate notice of entitlement letter"

Preferably, each PCT applicant record further includes an inventor name, an inventor address and a priority document application number.

According to a *fifteenth* aspect of the present invention there is disclosed an interface for receiving a PCT national phase filing instruction comprising:
(a) at least one instructor information field adapted to receive instructor information;
(b) at least one PCT application identifier field adapted to receive a PCT application identifier;
(c) at least one country/region selection field adapted to receive one or more country/region selections; and
(d) a filing instruction confirmer adapted to receive the national phase filing instruction.

Preferably, the at least one instructor information field comprises one or more of:
(vi) a first name field adapted to receive an instructor first name;
(vii) a last name field adapted to receive an instructor last name;
(viii) a firm name field adapted to receive an instructor firm name;
(ix) an email address field adapted to receive an instructor email address; and
(x) a reference field adapted to receive an instructor reference.

Preferably, the PCT application identifier field comprises one or more of:
(c) a PCT application number field adapted to receive a PCT application number; and
(d) a publication number field adapted to receive a publication number.

Preferably, each country/region selection field has at least one corresponding prosecuting attorney information field adapted to receive prosecuting attorney information.

Preferably, the at least one prosecuting attorney information field comprises one or more of:
(i) a prosecuting attorney name field adapted to receive a prosecuting attorney name; and
(ii) a prosecuting attorney firm field adapted to receive a prosecuting attorney firm name.

Preferably, the filing instruction confirmer comprises one or more of:
(i) a button;
(ii) an icon;
(iii) an image
adapted to run a submit program in response to a user supplied confirmation command.

Preferably, the user supplied confirmation command comprises one or more of:
(i) one or more mouse clicks; and
(ii) the depression of one or more keys on the keyboard.

According to a *sixteenth* aspect of the present invention there is disclosed email for receiving a PCT national phase filing instruction comprising:
(a) a PCT application identifier region adapted to display a PCT application identifier; and
(b) at least one country/region selection field adapted to receive one or more country/region selections.

According to a *final* aspect of the present invention there is disclosed computer program comprising program instructions which, when loaded into a computer, constitute the aspects of the present invention described above. That computer program may be embodied on a record medium, stored in a computer memory, embodied in a read-only memory or carried on an electrical carrier signal.

### THE INVENTION EXTENDS TO THE FOLLOWING CLAUSES:

1. A method of lodging a PCT national phase patent application with a patent office, the method comprising the steps of:
   (d) receiving a national phase filing instruction which:
      (iii) identifies a PCT application; and
      (iv) nominates a prosecuting attorney firm;
   (e) generating a national phase entry message which:
      (iii) identifies the PCT application; and
      (iv) is addresses to the patent office;
   (f) generating an instructing message which;
      (i) identifies the PCT application; and
      (ii) is addresses to the prosecuting attorney firm;
   (d) sending the national phase entry message to the patent office, thereby lodging the PCT national phase application; and
   (e) sending the instructing message to the prosecuting attorney firm.
2. A method according to clause 1 wherein the national phase entry message includes a request that the PCT application enter the national phase.
3. A method according to clause 1 or clause 2 wherein the instructing message advises the prosecuting attorney firm that the PCT application has entered the national phase and asks the firm to continue the national phase prosecution of that PCT application.
4. A method according to any one of clauses 1 to 3 wherein the steps of sending the national phase entry message to the patent office and sending the instructing message to the prosecuting attorney firm comprises sending the messages by one or more of:
   (i) fax;
   (ii) email;
   (iii) EDI transfer;
   (iv) courier;
   (v) ordinary post; and
   (vi) hand delivery.
5. A computer system for lodging a PCT national phase application with a patent office comprising:
   (a) an interface adapted to receive a national phase filing instruction, in communication with;
   (b) a document generator adapted to generate a national phase entry message, in communication with;
   (c) a document sender adapted to send said national phase entry message to said patent office;
   wherein, when the interface receives a national phase filing instruction the document generator generates the national phase entry message and the document sender sends the message to the patent office thereby lodging the PCT national phase application.
6. A computer system according to clause 5 wherein said interface comprises one or more of:
   (a) PCT application identifier receiving means adapted to receive a PCT application identifier;
   (b) country/region selection means adapted to receive one or more country/region selections;
   (c) prosecuting attorney selection means adapted to receive one or more prosecuting attorney selections; and
   (d) instructing attorney information receiving means adapted to receive instructing attorney information;
   and said national phase filing instruction comprises one or more of:
   (a) a PCT application identifier;
   (b) one or more country/region selections;
   (c) one or more prosecuting attorney selections; and
   (d) instructing attorney information.
7. A computer system according to clause 6 wherein said PCT application identifier comprises one or more of:
   (e) a PCT application number; and
   (f) a WIPO publication number.
8. A computer system according to clause 6 or clause 7 wherein said one or more country/region selections comprise the selection of any PCT country or region.
9. A computer system according to any one of clauses 6 to 8 wherein said prosecuting attorney selections include the selection of any prosecuting attorney firm or prosecuting attorney qualified to prosecute patent applications before a patent office.
10. A computer system according to clause 8 or clause 9 wherein each country/region selection means has a corresponding prosecuting attorney selection means.
11. A computer system according to any one of clauses 6 to 10 wherein said instructing attorney information comprises one or more of:
   (xi) an instructing attorney first name;
   (xii) an instructing attorney last name;
   (xiii) an instructing attorney firm name;
   (xiv) an instructing attorney email address; and
   (xv) an instructing attorney reference.
12. A computer system according to any one of clauses 6 to 11 wherein said receiving means and said selection means comprise one or more of:
   (i) a selectable check box;
   (ii) a selectable radio button;
   (iii) an editable text field;
   (iv) a selectable drop down box; and
   (v) a selectable icon.
13. A computer system according to any one of clauses 5 to 12 wherein said document generator is also adapted to generate:
   (a) an instructing message addressed to the prosecuting attorney firm;
   (b) a confirmation message addressed to the instructing attorney;
   (c) a document request message addressed to the patent office; and
   (d) an invoice addressed to the instructing attorney.
14. A computer system according to clause 13 wherein the instructing message advises the prosecuting attorney firm that the PCT application has entered the national phase and asks the firm to continue the national phase prosecution of that PCT application.
15. A computer system according to clause 13 or clause 14 wherein the confirmation message advises the instructing attorney that the PCT application has entered the national phase.
16. A computer system according to any one of clauses 13 to 15 wherein the document request message asks the patent office to send a copy of the PCT application's published specification and International Preliminary Examination Report (IPER) to the prosecuting attorney.
17. A computer system according to any one of clauses 13 to 16 wherein the invoice charges the instructing attorney a flat service fee for lodging the PCT national phase application.
18. A computer system according to any one of clauses 5 to 17 wherein the national phase entry message includes a request that the PCT application enter the national phase.
19. A computer system according to any one of clauses 13 to 18 wherein the patent office has one or more of:
   (a) an email address; and
   (b) a fax number
   and wherein the document sender sends the national phase entry message and the document request message to the patent office by one or more of:
   (a) emailing the message to the email address; and
   (b) faxing the message to the fax number.
20. A computer system according to any one of clauses 12 to 19 wherein the prosecuting attorney firm and the instructing attorney each have one or more of:
   (a) an email address; and
   (b) a fax number
   and wherein the document sender sends the instructing message to the prosecuting attorney firm and the confirmation message and invoice to the instructing attorney by one or more of:
   (a) emailing the message to the email address; and
   (b) faxing the message to the fax number.
21. A computer system according to any one of clauses 5 to 20 wherein said document sender comprises one or more of:
   (a) an email sending computer program; and
   (b) a fax sending computer program.
22. A computer system according to any one of clauses 12 to 21 wherein said document generator is in communication with a document template database which stores:
   (a) a national phase entry message template;
   (b) an instructing message template;
   (c) a confirmation message template;
   (d) a document request message template; and
   (e) an invoice template
   and wherein the document generator generates the messages and invoices by:
   (a) identifying the relevant message/invoice template in the template database;
   (b) generating a new message/invoice resembling the message/invoice template; and
   (b) inserting information specific to the PCT application into the new message/invoice.
23. An interface for receiving PCT national phase filing instructions, said national phase filing instructions comprising one or more of:
   (a) a PCT application identifier;
   (b) one or more country/region selections;
   (c) one or more prosecuting attorney selections; and
   (d) instructing attorney information
   and said interface comprising one or more of:
   (a) PCT application identifier receiving means adapted to receive said PCT application identifier;
   (b) country/region selection means adapted to receive said country/region selection(s);
   (c) prosecuting attorney selection means adapted to receive said prosecuting attorney selection(s); and
   (d) instructing attorney information receiving means adapted to receive said instructing attorney information.
24. An interface according to clause 23 wherein when said interface receives a national phase filing instruction it instructs a document generator to generate a national phase filing message.
25. A document generator adapted to generate one or more of:
   (a) a national phase entry message addressed to a patent office;
   (b) an instructing message addressed to a prosecuting attorney firm;
   (c) a confirmation message addressed to an instructing attorney;
   (d) a document request message addressed to a patent office; and
   (e) an invoice addressed to an instructing attorney.
26. A document generator according to clause 25 wherein said document generator is adapted to generate said messages/invoices in response to an instruction received from an interface adapted to receive national phase filing instructions.
27. A document generator according to clause 25 wherein said document generator is adapted to generate said messages/invoices in response to an email received from an instructing attorney.
28. A document generator according to any one of clauses 25 to 27 wherein when said generator generates a national phase entry message it instructs a document sender to send the national phase entry message to a patent office.
29. A document sender adapted to send one or more of:
   (a) a national phase entry message to a patent office;
   (b) an instructing message to a prosecuting attorney firm;
   (c) a confirmation message to an instructing attorney;
   (d) a document request message to a patent office; and
   (e) an invoice to an instructing attorney
   by one or more of:
   (a) email; and
   (b) fax.
30. A document sender according to clause 29 wherein said document sender is adapted to send said messages/invoices in response to an instruction received from a document generator adapted to generate such messages/invoices.
31. A computer program comprising program instructions which, when loaded into a computer, constitute the computer system of any one of clauses 5 to 22.
32. A computer program comprising program instructions which, when loaded into a computer, constitute the interface of clause 23 or clause 24.
33. A computer program comprising program instructions which, when loaded into a computer, constitute the document generator of any one of clauses 25 to 28.
34. A computer program comprising program instructions which, when loaded into a computer, constitute the document sender of any one of clauses 28 to 30.
35. A computer program according to any one of clauses 31 to 34 embodied on a record medium.
36. A computer program according to any one of clauses 31 to 34 stored in a computer memory.
37. A computer program according to any one of clauses 31 to 34 embodied in a read-only memory.
38. A computer program according to any one of clauses 31 to 34 carried on an electrical carrier signal.
39. A computer system for sending a PCT national phase filing invitation to an instructing attorney comprising:
   (a) a database searcher adapted to search:
      (i) a PCT application database which stores information about a plurality of PCT applications, each application having a corresponding instructing attorney;
      (ii) an attorney database which stores information about a plurality of instructing attorneys, each attorney having a corresponding address;
   (b) a document generator in communication with said database searcher and adapted to generate a national phase filing invitation;
   (c) a document sender in communication with said document generator and adapted to send said national filing invitation to said instructing attorney;
   wherein, the database searcher:
   (a) searches the PCT application database to identify a selected PCT application which is due to enter the national phase within a predetermined number of weeks;
   (b) searches the PCT application database to identify the selected PCT applications' corresponding instructing attorney; and
   (c) searches the attorney database to identify the corresponding instructing attorney's address;
   whereupon the document generator generates a national phase filing invitation which identifies the selected PCT application and the document sender sends the national phase filing invitation to the corresponding instructing attorney's address.
40. A computer system according to clause 39 wherein said invitation invites the instructing attorney to cause the PCT application to enter the national phase via a computer system for lodging national phase applications.
41. A computer system according to clause 39 wherein said invitation invites the instructing attorney to cause the PCT application to enter the national phase via an interface for receiving PCT national phase filing instructions.
42. A computer system according to any one of clauses 39 to 41 wherein the corresponding instructing attorney's address is:
   (a) an email address; or
   (b) a fax number
   and wherein the document sender sends the national phase filing invitation to the instructing attorney by one of:
   (a) emailing the invitation to the email address; and
   (b) faxing the invitation to the fax number.
43. A computer system according to any one of clauses 39 to 42 wherein said document sender comprises one or more of:
   (a) an email sending computer program; and
   (b) a fax sending computer program.
44. A computer system according to any one of clauses 39 to 43 wherein said document generator is in communication with a document template database which stores a national phase filing invitation template
   and wherein the document generator generates the national phase filing invitation by:
   (a) identifying the invitation template in the template database;
   (b) generating a new invitation resembling the invitation template; and
   (c) inserting information specific to the selected PCT application into the new invitation.
45. A computer system according to any one of clauses 39 to 44 wherein said predetermined number of weeks is between 0 weeks and 12 weeks.
46. A computer system according to clause 45 wherein said predetermined number of weeks is between 3 weeks and 6 weeks.
47. A database searcher for use in identifying a selected PCT application which is due to enter the national phase within a predetermined number of weeks, said searcher being adapted to search:
   (a) a PCT application database which stores information about a plurality of PCT applications, each application having a corresponding instructing attorney; and
   (b) an attorney database which stores information about a plurality of instructing attorneys, each attorney having a corresponding address
   wherein, in use, the database searcher
   (a) searches the PCT application database to identify said selected PCT application which is due to enter the national phase within said predetermined number of weeks;
   (b) searches the PCT application database to identify the selected PCT applications' corresponding instructing attorney; and
   (c) searches the attorney database to identify the corresponding instructing attorney's address.
48. A database searcher according to clause 47 wherein once the searcher identifies the selected PCT application which is due to enter the national phase within said predetermined number of weeks it instructs a document generator to generate a national phase filing invitation which:
   (i) identifies said selected PCT application; and
   (ii) is addressed to said instructing attorney.
49. A document generator for generating national phase filing invitations, wherein said document generator is in communication with a document template database which stores a national phase filing invitation template and wherein the document generator generates the national phase filing invitation by:
   (a) identifying the invitation template in the template database;
   (b) generating a new invitation resembling the invitation template; and
   (c) inserting information specific to the selected PCT application into the new invitation.
50. A document generator according to clause 49 wherein said document generator is adapted to generate said invitation in response to an instruction received from a database searcher adapted to search a PCT application database and an attorney database.
51. A document generator according to clause 49 or clause 50 wherein once said generator generates a national phase filing invitation it instructs a document sender to send the invitation to an instructing attorney.
52. A document sender for sending national phase filing invitations to instructing attorneys, said sender being adapted to send said invitations to said instructing attorneys by one or more of:
   (a) email; and
   (b) fax.
53. A document sender according to clause 52 wherein said document sender is adapted to send said invitation in response to an instruction received from a document generator adapted to generate such invitations.
54. A computer program comprising program instructions which, when loaded into a computer, constitute the computer system of any one of clauses 39 to 46.
55. A computer program comprising program instructions which, when loaded into a computer, constitute the database searcher of clause 47 or clause 48.
56. A computer program comprising program instructions which, when loaded into a computer, constitute the document generator of any one of clauses 49 to 51.
57. A computer program comprising program instructions which, when loaded into a computer, constitute the document sender of clause 52 or clause 53.
58. A computer program according to any one of clauses 54 to 57 embodied on a record medium.
59. A computer program according to any one of clauses 54 to 57 stored in a computer memory.
60. A computer program according to any one of clauses 54 to 57 embodied in a read-only memory.
61. A computer program according to any one of clauses 54 to 57 carried on an electrical carrier signal.
62. A computer system substantially as hereinbefore described with reference to the accompanying drawings.
63. An interface substantially as hereinbefore described with reference to the accompanying drawings.
64. A document generator substantially as hereinbefore described with reference to the accompanying drawings.
65. A document sender substantially as hereinbefore described with reference to the accompanying drawings.
66. A method of identifying and attracting a potential PCT national phase application using a PCT application database and an attorney database;
   wherein said PCT application database includes a plurality of PCT application records, each PCT record including a priority date, a PCT application number and a PCT attorney name;
   wherein said attorney database includes a plurality of attorney records, each attorney record including an attorney name and an attorney address;
   and wherein the method includes the steps of:
   (a) searching said PCT application database on a current date and:
      (i) identifying a selected PCT record having a priority date which is less than 31 months prior to the current date;
      (ii) identifying said PCT application number which corresponds to said selected PCT record as a selected PCT application number;
      (iii) identifying said PCT attorney name which corresponds to said selected PCT record as a selected PCT attorney name;
   (b) searching said attorney database and:
      (i) identifying a selected attorney record having an attorney name which matches said selected PCT attorney name; and
      (ii) identifying said attorney address which corresponds to said selected attorney record as a selected attorney address;
   (c) generating a national phase filing invitation; and
   (d) sending said invitation to said selected attorney address.
67. A method according to clause 66 wherein said invitation includes said selected PCT application number.
68. A method according to clause 66 or clause 67 wherein said attorney address includes a selected email address and the step of sending said invitation to said selected attorney address includes sending an email to said selected email address.
69. A method according to any one of clauses 66 to 68 wherein said invitation includes one or more of:
   (a) said PCT application number of said selected PCT record;
   (b) a national phase entry due date corresponding to said selected PCT record;
   (c) response information; or
   (d) a link to a national phase lodgment website.
70. A method according to any one of clauses 66 to 69 wherein said priority date of said selected PCT record is between 18 and 31 months prior to said current date.
71. A method according to any one of clauses 66 to 70 wherein the step of generating said national phase filing invitation includes using an invitation template, said template including an invitation address region, an invitation subject region, an invitation body and standard text, and the method includes the steps of:
   (a) identifying said invitation template;
   (b) generating a new national phase filing invitation resembling said template;
   (c) inserting said selected attorney address in said new invitation's address region;
   (d) inserting said selected PCT application number in one or more of said new invitation's:
      (i) subject region; or
      (ii) body
   (e) calculating a national phase entry due date from said selected PCT record's priority date; and
   (f) inserting said due date in one or more of said new invitation's:
      (i) subject region; or
      (ii) body.
72. A method according to clause 71 wherein said new invitation includes one or more of:
   (a) a link to a national phase lodgment website;
   (b) user name information; and
   (c) password information.
73. A method according to clause 72 wherein said user name is said selected PCT application number.
74. A method according to clause 72 or clause 73 wherein said password is said selected attorney email address.
75. A method of receiving a PCT national phase application filing instruction by email including the steps of:
   (a) receiving an invitation reply to a national phase filing invitation;
   (b) confirming that said reply is a filing instruction;
   (c) identifying a selected PCT application number corresponding to said reply;
   (d) generating a national phase entry message corresponding to said selected PCT application number; and
   (e) forwarding said national phase entry message to said local patent office.
76. A method of receiving a PCT national phase application filing instruction via a national phase lodgment website;
   wherein said website includes a PCT application identifier receiving field and a filing instruction confirmer and is in communication with a PCT application database;
   wherein said PCT application database includes a plurality of PCT application records, each PCT record including a PCT application identifier, applicant information and an invention title;
   and wherein the method includes the steps of:
   (a) receiving a particular PCT application identifier from an instructing attorney via said PCT application identifier receiving field;
   (b) searching said PCT application database;
   (c) identifying said particular PCT record corresponding to said particular PCT application identifier;
   (d) displaying at least part of said particular PCT record on said website;
      and
   (e) receiving a particular PCT national phase application filing instruction via said filing instruction confirmer.
77. A method according to clause 76 wherein the step of receiving said particular PCT application identifier from said instructing attorney via said PCT application identifier receiving field includes the additional step of confirming the identity of said instructing attorney.
78. A method according to clause 77 wherein the step of confirming the identity of said instructing attorney includes receiving security information from said attorney via a login screen.
79. A method according to any one of clauses 76 to 78 wherein the method includes the further step of receiving additional application information from said instructing attorney.
80. A method according to clause 79 wherein said additional application information includes information relating to said number of pages of a particular complete specification which corresponds to said particular PCT application.
81. A method according to any one of clauses 76 to 80 including the further step of displaying cost information via said national phase lodgment website.
82. A method according to clause 81 wherein said cost information includes information relating to one or more of:
   (a) Service charges for filing said PCT national phase application;
   (b) National Phase government filing fees; and
   (c) Government fees for additional specification pages or clauses above a predetermined page number or clause number.
83. A method according to any one of clauses 76 to 82 wherein said website is in communication with an attorney database which includes a plurality of attorney records, each attorney record including an attorney name and attorney address information, and wherein the method includes the further steps of:
   (a) searching said attorney database to identify said attorney record corresponding to said instructing attorney;
   (b) displaying at least part of said instructing attorney record on said website; and
   (c) receiving confirmation or denial of said accuracy of said instructing attorney record from said instructing attorney.
84. A method according to clause 83 wherein the step of receiving said denial of said accuracy of said instructing attorney record is followed by the step of providing a record amendment screen adapted for amending said instructing attorney record stored in said attorney database.
85. A method of automatically filing a particular PCT national phase application with a patent office using a national phase entry message template, said application having a particular PCT application identifier, said template including an identifier insertion point, and the method including the steps of:
   (a) receiving an electronic filing instruction which includes said particular PCT application identifier;
   (b) generating a new national phase entry message resembling said national phase entry message template;
   (c) inserting said particular PCT application identifier in said insertion point of said new national phase entry message; and
   (d) forwarding said message to said patent office.
86. A method according to clause 85 wherein said template and said new national phase entry message further includes additional filing information.
87. A method according to clause 85 wherein said additional filing information includes one or more of:
   (a) an address for service;
   (b) a date; and
   (c) a filing attorney signature.
88. A method according to any one of clauses 85 to 87 wherein the method is performed using a PCT application database which includes a plurality of PCT application records, each PCT record including a PCT application identifier, applicant information and an invention title, such that the step of receiving said electronic filing instruction is followed by the step of searching said PCT application database to identify said particular PCT record corresponding to said particular PCT application identifier.
89. A method according to any one of clauses 85 to 88 wherein said template further includes an applicant information insertion point and an invention title insertion point and the step of generating said new national phase entry message is followed by the additional steps of:
   (a) inserting said particular applicant information in said applicant information insertion point of said new national phase entry message; and
   (b) inserting said particular invention title in said invention title insertion point of said new national phase entry message.
90. A method according to any one of clauses 85 to 89 wherein the step of forwarding said message to said patent office includes forwarding said message by one or more of:
   (a) email;
   (b) facsimile;
   (c) EDI transfer; or
   (d) post.
91. A method according to any one of clauses 85 to 90 wherein said electronic filing instruction is received from an instructing attorney and the step of forwarding said new national phase entry message to said patent office is followed by the step of forwarding a filing confirmation message to said instructing attorney.
92. A method according to clause 91 wherein said filing confirmation message resembles a filing confirmation message template and includes one or more of:
   (a) said particular PCT application identifier;
   (b) said particular applicant information; and
   (c) said particular invention title.
93. A method according to any one of clauses 85 to 92 wherein said new national phase entry message is forwarded to said patent office on a filing date.
94. A method according to clause 93 wherein said filing confirmation message also includes said filing date.
95. A method according to any one of clauses 85 to 94 wherein said new national phase entry message is in said form of a letter.
96. A method according to any one of clauses 85 to 94 wherein said new national phase entry message is in said form of an email.
97. A method according to any one of clauses 85 to 94 wherein said new national phase entry message is in an electronic form particularly suited to said patent office.
98. A method according to any one of clauses 85 to 97 wherein the step of receiving said electronic filing instruction includes receiving said instruction in the form of:
   (a) an email;
   (b) a fax;
   (c) a command received via said website; or
   (d) an ordinary letter.
99. A method of generating a notice of entitlement form relating to a particular PCT national phase application using
   (a) an instruction receiving interface,
   (b) a PCT application database, and
   (c) a notice of entitlement form template,
   wherein said interface includes an initiator and a phrase having a plurality of corresponding selectable response check boxes adjacent thereto, each check box having a corresponding response text,
   wherein said PCT application database includes a particular PCT application record including a particular PCT application identifier, a particular applicant name and a particular applicant address,
   wherein said notice of entitlement form template includes standard text, database retrieved information insertion points and response text insertion points,
   and wherein the method includes the steps of:
   displaying said instruction receiving interface;
   receiving an attorney supplied selection of one of said selectable response check boxes;
   generating a new notice of entitlement form resembling said notice of entitlement form template;
   inserting said particular PCT application identifier, said particular applicant name and said particular applicant address in said database retrieved information insertion points; and
   inserting said response text corresponding to said selected check box in said response text insertion point to produce a new notice of entitlement form.
100. A method according to clause 99 wherein said attorney supplied selection of one of said selectable response check boxes is supplied by an instructing attorney and the method further includes the step of forwarding said new notice of entitlement form to said instructing attorney.
101. A method according to clause 100 wherein the step of forwarding said new notice of entitlement form to said instructing attorney includes forwarding said form as an attachment to an email addressed to said attorney.
102. A method according to any one of clauses 99 to 101 wherein said phrase also has a corresponding additional information entry field.
103. A method according to any one of clauses 99 to 102 wherein said initiator is a button marked with one or more of:
   (a) "continue"
   (b) "go"; or
   (c) "generate notice of entitlement letter"
104. A method according to any one of clauses 99 to 103 wherein each PCT applicant record further includes an inventor name, an inventor address and a priority document application number.
105. An interface for receiving a PCT national phase filing instruction comprising:
   (a) At least one instructor information field adapted to receive instructor information;
   (b) at least one PCT application identifier field adapted to receive a PCT application identifier;
   (c) at least one country/region selection field adapted to receive one or more country/region selections; and
   (d) a filing instruction confirmer adapted to receive said national phase filing instruction.
106. An interface according to clause 105 wherein said at least one instructor information field comprises one or more of:
   (i) A first name field adapted to receive an instructor first name;
   (ii) a last name field adapted to receive an instructor last name;
   (iii) a firm name field adapted to receive an instructor firm name;
   (iv) an email address field adapted to receive an instructor email address; and
   (v) a reference field adapted to receive an instructor reference.
107. An interface according to clause 105 or clause 106 wherein said PCT application identifier field comprises one or more of:
   (i) a PCT application number field adapted to receive a PCT application number; and
   (ii) a publication number field adapted to receive a publication number.
108. An interface according to any one of clauses 105 to 107 wherein each country/region selection field has at least one corresponding prosecuting attorney information field adapted to receive prosecuting attorney information.
109. An interface according to clause 108 wherein said at least one prosecuting attorney information field comprises one or more of:
   (i) a prosecuting attorney name field adapted to receive a prosecuting attorney name; and
   (ii) a prosecuting attorney firm field adapted to receive a prosecuting attorney firm name.
110. An interface according to any one of clauses 105 to 108 wherein said filing instruction confirmer comprises one or more of:
   (i) a button;
   (ii) an icon;
   (iii) an image
   adapted to run a submit program in response to a user supplied confirmation command.
111. An interface according to clause 110 wherein said user supplied confirmation command comprises one or more of:
   (i) one or more mouse clicks; and
   (ii) the depression of one or more keys on the keyboard.
112. An email for receiving a PCT national phase filing instruction comprising:
   (a) a PCT application identifier region adapted to display a PCT application identifier; and
   (b) at least one country/region selection field adapted to receive one or more country/region selections.
113. A computer program comprising program instructions for causing a computer to perform the method of any of clauses 66 to 104.
114. A computer program comprising program instructions which, when loaded into a computer, constitute the interface of any of clauses 105 to 112.
115. A computer program according to clause 113 or clause 114 embodied on a record medium.
116. A computer program according to clause 113 or clause 114 stored in a computer memory.
117. A computer program according to clause 113 or clause 114 embodied in a read-only memory.
118. A computer program according to clause 113 or clause 114 carried on an electrical carrier signal.
119. A method substantially as hereinbefore described with reference to the accompanying drawings.
120. An interface substantially as hereinbefore described with reference to the accompanying drawings.

### PREFERRED EMBODIMENT

The preferred embodiments will now be described, by way of example only, with reference to the accompanying drawings in which:
Figure 1 is a block diagram of a computer system for attracting and lodging PCT national phase applications according to the invention;
Figure 2 is a block diagram of a PCT database according to the invention;
Figure 3 is a block diagram of an attorney database according to the invention;
Figure 4 is a high level flow diagram illustrating the method of generating and sending a national phase filing invitation according to the invention;
Figure 5 is a schematic representation of a first embodiment of the national phase filing invitation according to the invention;
Figure 6 is a schematic representation of a second embodiment of the national phase filing invitation according to the invention;
Figure 7 is a low level flow diagram illustrating the method of generating the national phase filing invitation according to the invention;
Figure 8 is a schematic representation of a first embodiment of the national phase lodgment interface according to the invention;
Figure 9 is a high level flow diagram illustrating the method of receiving a national phase filing instruction via the first embodiment of the national phase lodgment interface and generating an electronic national phase filing instruction according to the invention;
Figure 10 is a schematic representation of a first embodiment of the national phase entry message according to the invention;
Figure 11 is a schematic representation of a first embodiment of a document request message according to the invention;
Figures 12A and 12B are schematic representations of two parts of a second embodiment of the national entry message according to the invention;
Figure 13 is a schematic representation of a first embodiment of a confirmation message according to the invention;
Figure 14 is a schematic representation of a second embodiment of the confirmation message according to the invention;
Figure 15 is a schematic representation of an invoice according to the invention;
Figure 16 is a schematic representation of a prosecuting attorney instructing message invoice according to the invention;
Figure 17 is a low level flow diagram illustrating the method of generating the national phase entry message according to the invention;
Figure 18 is a schematic representation of an electronic national phase filing instruction according to the invention;
Figure 19 is a flow diagram illustrating a method of receiving security information from an instructing attorney according to the invention;
Figure 20 is a flow diagram illustrating a method of receiving confirmation of attorney details according to the invention;
Figure 21 is a flow diagram illustrating a second embodiment of the method of receiving a national phase filing instruction via the national phase lodgment interface according to the invention;
Figure 22 is a flow diagram illustrating a method of receiving additional information from an instructing attorney via the website according to the invention;
Figure 23 is a flow diagram illustrating a method of receiving payment information from the instructing attorney, according to the invention;
Figure 24 is a flow diagram illustrating the method of generating a notice of entitlement form relating to a particular PCT application, according to the invention; and
Figure 25 is schematic representation of a notice of entitlement instruction receiving interface according to the invention.

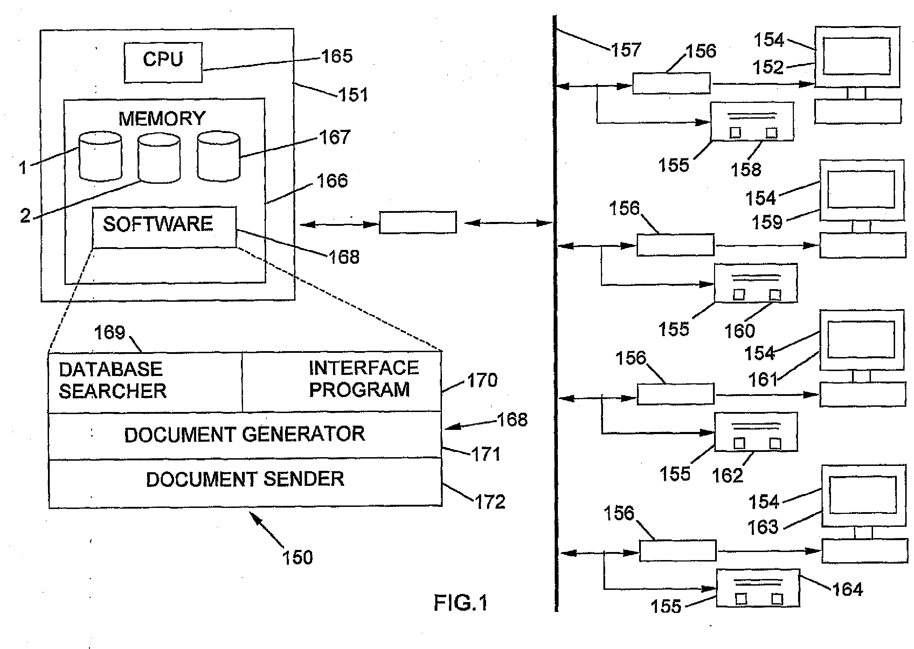

Figure 1 shows the computer system 150 for attracting and lodging PCT national phase applications according to the invention. The system comprises a processing computer 151 in communication with a number of computers 154 and fax machines 155 via a network 157 and a number of modems 156. The computers and fax machines include an instructor's computer 152 and fax machine 158, a prosecuting attorney's computer 159 and fax machine 160, a first patent office's computer 161 and fax machine 162 and a second patent office's computer 163 and fax machine 164. The first and second patent offices represent patent offices in any PCT country.

The processing computer 151 comprises a central processing unit (CPU) 165 and a memory 166. The memory stores a PCT application database 1, an attorney database 2, a document template database 167 and a number of software programs 168. The software programs comprise a database searcher 169, an interface program 170, a document generator 171 and a document sender 172. The databases and software programs may be stored in the memory of the processing computer 151 or in the memory of another computer or storage media which is in communication with the network.

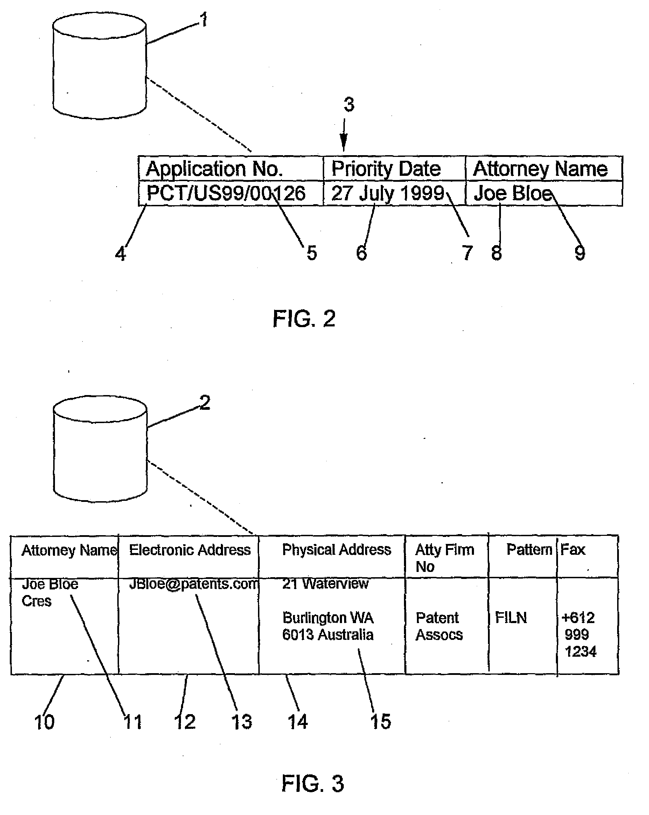

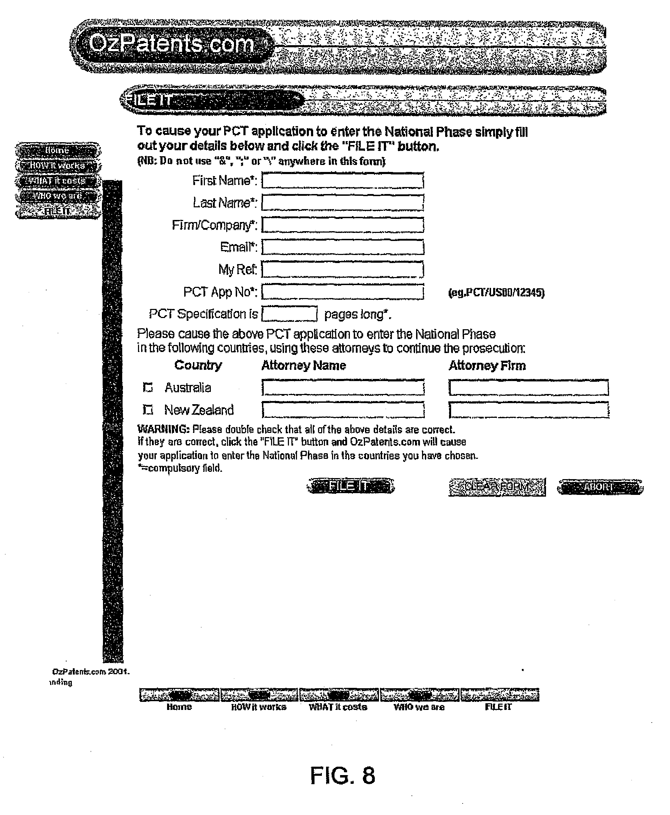

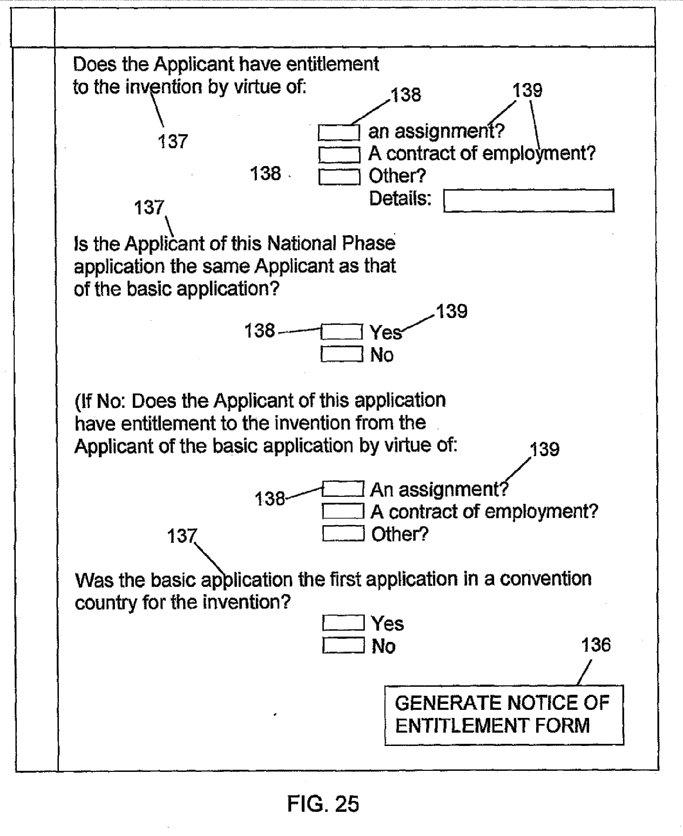

The computer system is able to perform a number of functions:
(a) It attracts PCT national phase applications by generating and sending national phase filing invitations to the instructing attorney computers and faxes (described below with reference to Figures 2 to 7);
(b) It receives national phase filing instructions via a national phase lodgment interface, generates national phase filing messages using its document generator and sends those messages to the patent office computers and faxes, thereby causing the PCT applications to enter the national phase (described below with reference to Figures 8 to 24);
(c) It generates formality documents such as Notice of Entitlement forms and Authorisation of Agent forms via the national phase lodgment interface (described below with reference to Figures 25 and 26).

The first function of the computer system is to attract PCT national phase applications by generating and sending national phase filing invitations to the instructing attorney computers and faxes.

PCT applications are published online approximately 18 months after their earliest priority date in electronic publications such as WIPO's PCT Electronic Gazette, the Espacenet website and the like. The applications do not need to enter the National Phase in most countries until 30 or 31 months after their priority date. It is therefore possible to capture the bibliographic details of those applications well before they are due to enter the national phase and to store them in the computer memory (or another recording medium) as a PCT application database.

The bibliographic details of the PCT applications not only include the application number, invention title and applicant name, but they also include the names and addresses of the firms (and sometimes the individual attorneys) who filed the applications. However, those bibliographic details do not include the email addresses or fax numbers of those instructing attorneys.

Because many attorney firms have web sites, it is possible to locate the email addresses and fax numbers of instructing attorneys/firms using various online search engines. It is therefore possible to capture the email addresses and fax numbers of a great number of potential instructing attorneys/firms and to store them in the computer memory as an attorney database.

Referring to Figure 1, the present invention attracts PCT national phase applications in the following way: The searching program searches the PCT application database to find a selected PCT application which is due to enter the national phase in the next few weeks. It identifies the instructing attorney who filed that PCT application and searches the attorney database to find his or her email address. If it finds that information the document generator generates a national phase filing invitation (in the form of an email) and inserts the relevant PCT application and attorney information into the invitation. The document sender then sends the invitation to the instructing attorney's email address via the modem. Similarly, if the attorney database only has the instructing attorney's fax number but not their email address, the document generator generates the invitation in the form of a fax and the document sender sends it to the instructing attorney's fax machine via the modem.

A more detailed explanation of this first function appears below with reference to Figures 2 to 7.

Referring to Figure 2, the PCT application database 1 includes a number of PCT application records 3. Each of the records includes at least an application number field 4 which stores a PCT application number 5, a priority date field 6 which stores a priority date 7, and an instructing attorney name field 8 which stores an instructing attorney name 9. The PCT application number 5 is the number allocated to the PCT application by the international receiving office. The priority date 7 is the filing date of the earliest priority document from which the PCT application claims priority and the instructing attorney name 9 is the name of the attorney responsible for the PCT application.

The PCT application database 1 may take on a variety of forms and may be stored in a variety of locations. In one embodiment it is an internet accessible database such as the WIPO PCT Gazette, or the Espacenet website which holds details of published PCT applications. Alternatively, instead of accessing the PCT database 1 via the internet, the PCT database may be stored in the processing computer's memory or on a CD ROM or other recording media. In another embodiment, the local PCT database 1 may be generated via scraping internet accessible databases or obtaining such electronic information by alternative data stream feeding methods. Alternative embodiments of the PCT database are also envisaged.

Turning now to Figure 3, the preferred embodiment of the attorney database 2 includes an attorney name field 10 which stores an attorney name 11, an attorney firm field which stores and attorney firm name, an electronic address field 12 which stores an electronic address 13 and an electronic address pattern field which stores an electronic address pattern identifier. It also includes a fax number field which stores an attorney fax number and a physical address field 14 which stores a physical address 15.

The attorney name field 10 in the attorney database 2 corresponds to the attorney name field 8 in the PCT application database 1. The physical address 15 is either a street address or a post office box address.

The electronic address 13 is an email address and the electronic address pattern identifier identifies the pattern of email addresses used at the instructing attorney firm. In the example shown, Joe Bloe works for Patent Associates and his email address is JBloe@patents.com. This suggests that the email addresses of other members of Joe's firm are probably made up of their first initial followed by their last name. The pattern indicia shown is FILN, which simply stands for the pattern "First Initial Last Name". Most firms have consistent email patterns which consist of combinations of the first, middle or last names of their employees or their initials. Since there are a finite number of popular email patterns, it is possible to guess the email address of an instructing attorney if the email address of another attorney at the same firm is known. This is done by applying the pattern "First Initial Last Name" to the person's name and adding the general firm address to the end. For example, if Robert Smith also worked at Patent Associates, his email address would probably be RSmith@patents.com. In this way, when the searching program searches the attorney database to see if their email address is known, the program only needs to find the firm email address and the email pattern that the firm uses. It can then generate the instructing attorney's unknown email address based on that pattern.

In a similar way to the PCT database, the attorney database may take on a number of forms. In one form, the attorney database may be partly derived from an internet accessible database, such as the lists of attorneys provided by the United States Patent and Trade Marks Office (USPTO) or other intellectual property organisations, such as the Licensing Executives Society (LES), the Chartered Institute of Patent Agents (CIPA), the Australian Institute of Patent and Trade Mark Attorneys and the like. However, these lists rarely include the email addresses or fax numbers of the instructing attorneys and it is necessary to obtain that information from their website or similar sources, on a case-by-case basis.

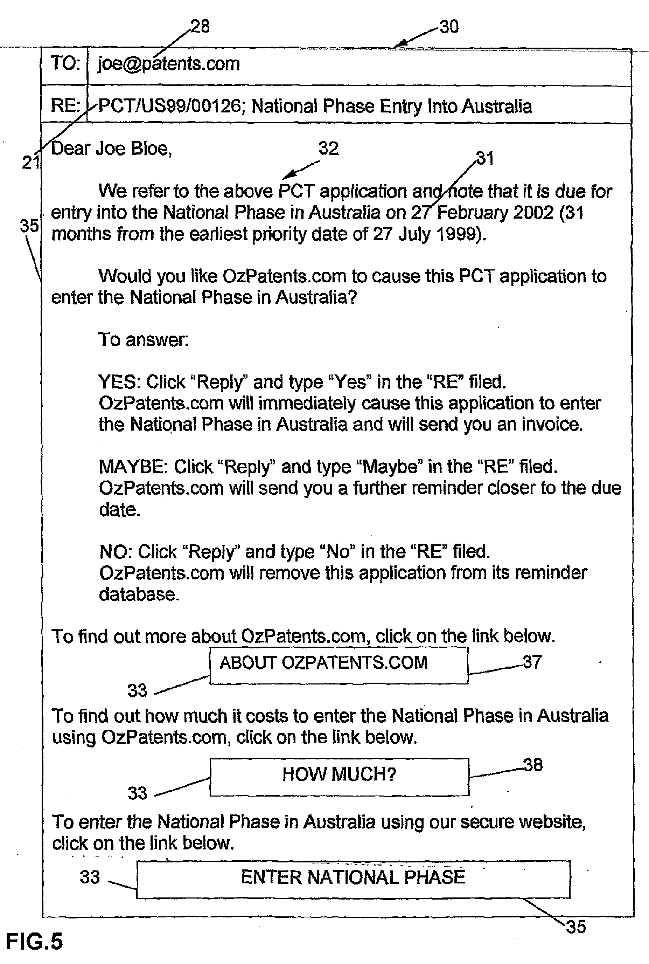

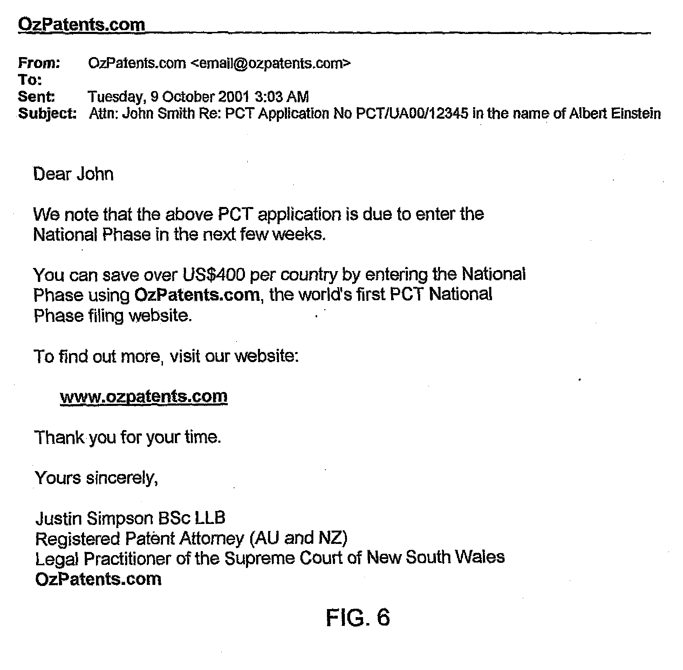

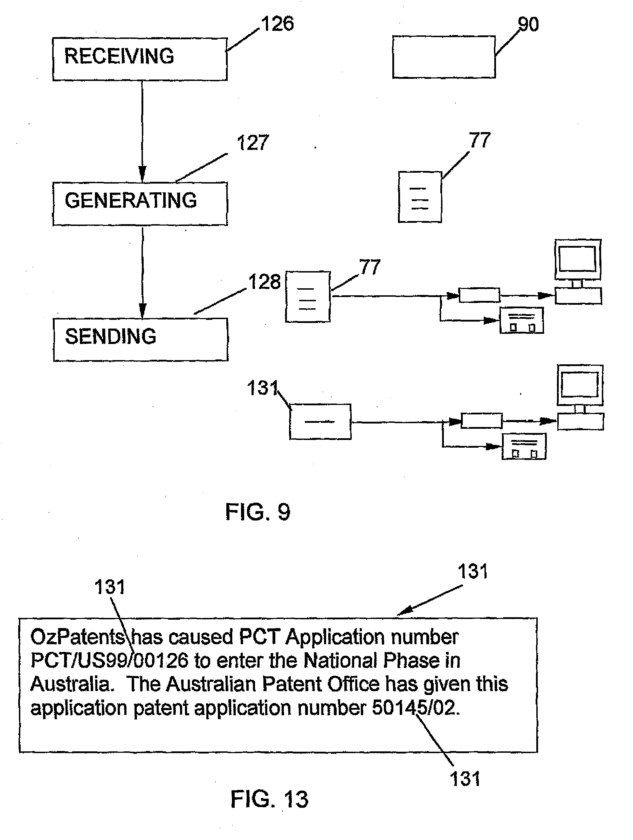

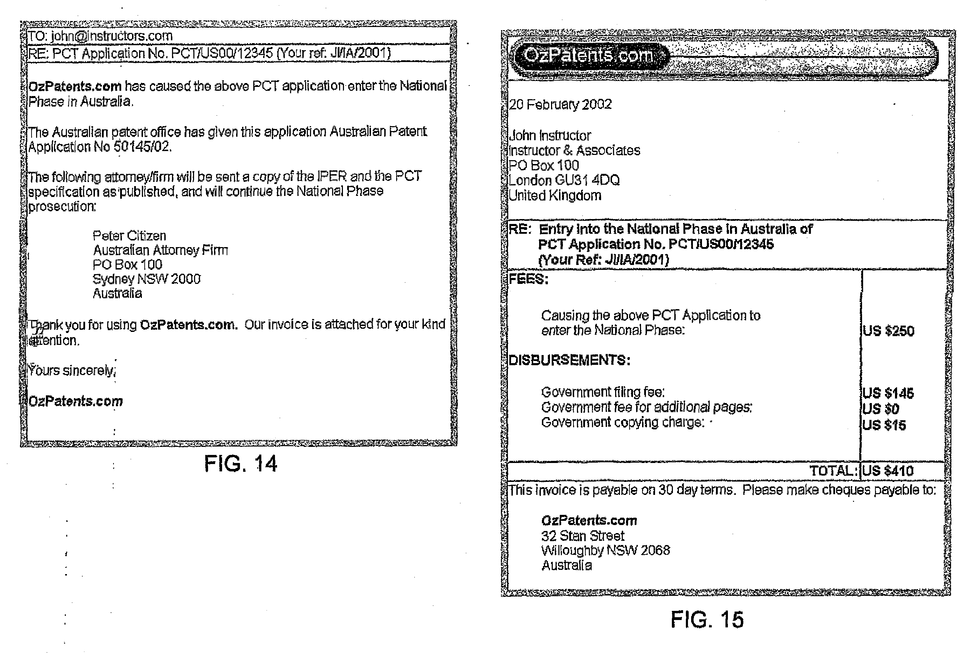

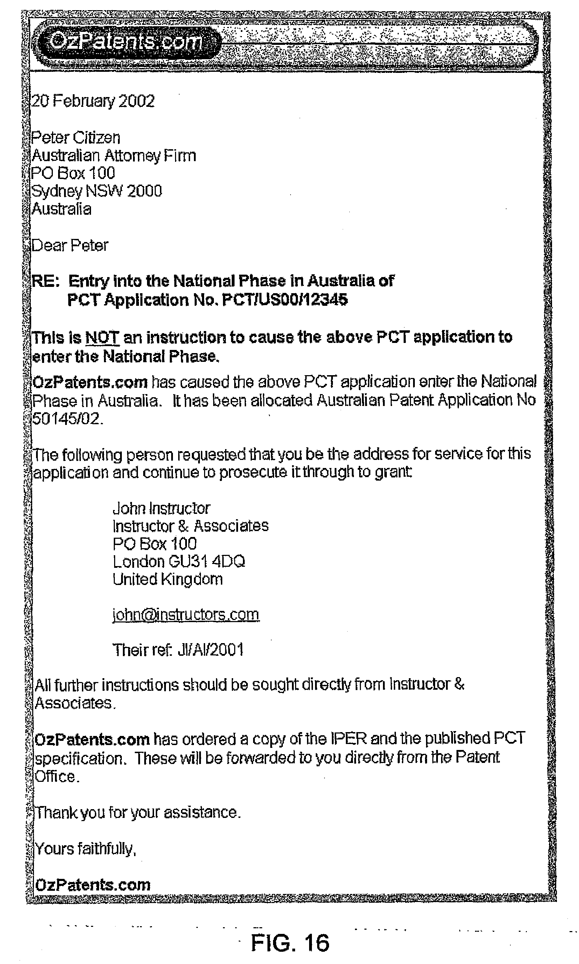

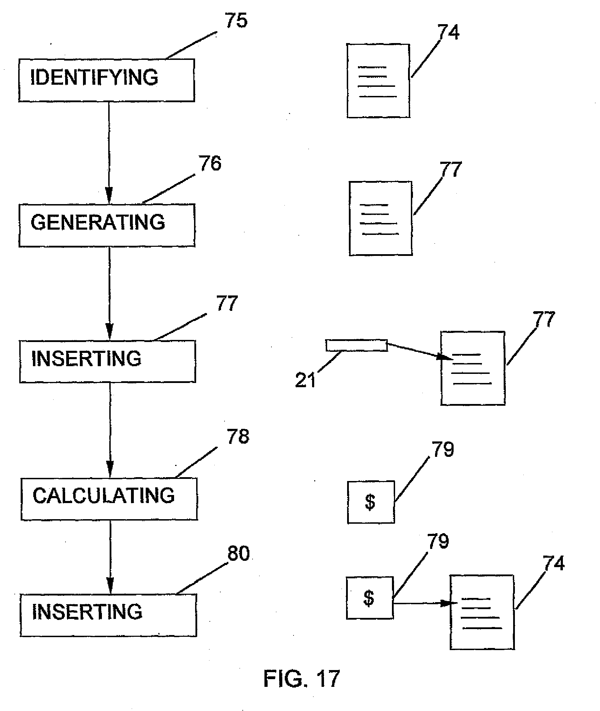

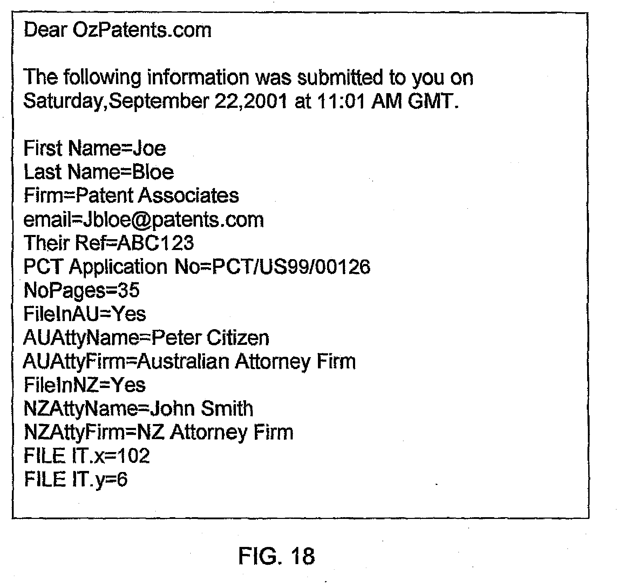

Although not illustrated in detail in any of the figures, the document template database stores the templates for all of the documents, messages and invitations generated by the system. It includes both fax and email versions of each of the templates, with variables positioned at various insertion points to allow the documents to be automatically generated by the document generator program. The template database includes templates for:
(a) the national phase filing invitation (Figures 5 and 6) which is sent to prospective attorneys to invite them to enter the national phase using the system;
(b) the national phase entry message (Figures 13, 15A and 15B) which is sent to the various patent offices and which causes the PCT applications to enter the national phase;
(c) the document request message (Figure 14) which is sent to the various patent offices, asking for a copy of the published specification and IPER report to be sent to the prosecuting attorney;
(d) the confirmation message (Figures 16 and 17) which is sent to the instructing attorney confirming that the national phase has been entered in the countries of interest;
(e) the invoice (Figure 18) sent to the instructing attorney once the national phase entry message has been sent to the relevant patent office; and
(f) notice of entitlement forms and other formality documents such as authorisation of agent letters, declarations of inventorship and the like, as required by the various patent offices.

A number of other document templates are also envisaged, depending upon the particular application of the present invention.

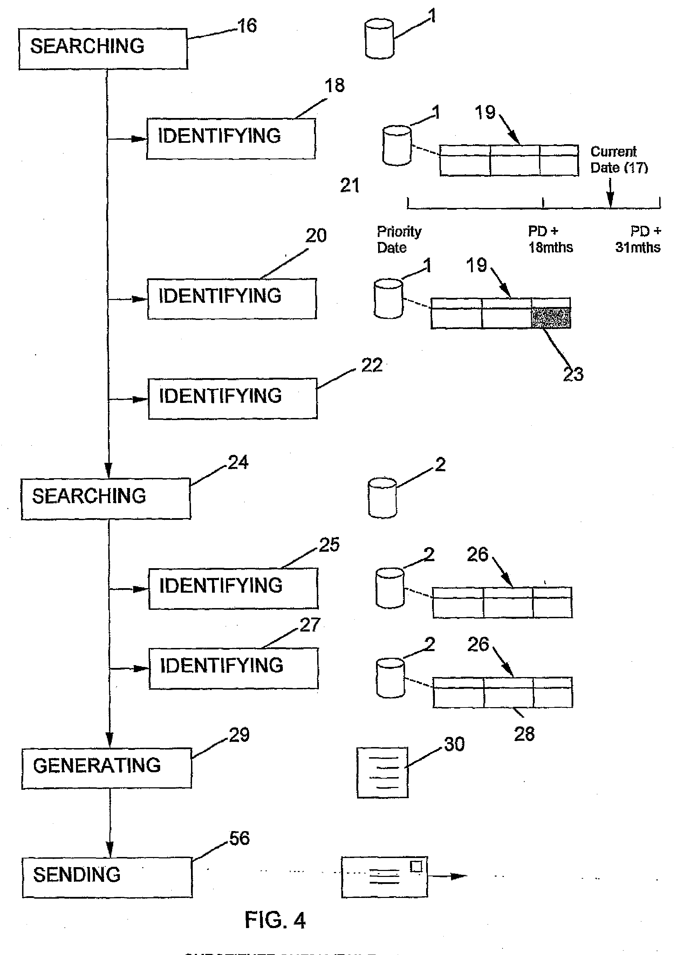

Figure 4 illustrates the method of generating and sending a national phase filing invitation according to the invention. To achieve this method, the searching program, the document generator and the document sender perform a number of steps:

The first step involves searching 16 the PCT application database 1 on a current date 17 and identifying 18 a selected PCT record 19 which has a priority date 7 which is less than 31 months prior to the current date 17. In practice, the priority date will be between 18 months and 31 months prior to the current date. This is because, as mentioned above, a PCT application is published 18 months after the priority date 7 and, at present, the latest date by which a PCT application may enter the national phase in a particular country is 31 months after the priority date. Thus, searching the PCT database 1 and identifying a selected PCT record 19 which has a priority date between 18 and 31 months prior to the current date 17, will identify all of those PCT applications which have become open to public inspection (OPI) and which still have the opportunity to enter the national phase in a particular country. Although countries such as Australia and New Zealand, and regions such as the European Union have 31 month due dates for entering the national phase, most other countries which are members of the PCT have 30 month due dates. For such countries, an adjustment to this calculation will be needed.

The next step involves identifying 20, the PCT application number 5 which corresponds to the selected PCT record 19. This PCT application number will be referred to as a "selected PCT application number" 21. The next step involves identifying 22 the PCT attorney name 9 which corresponds to the selected PCT record 19 as a selected attorney name 23. The next step involves searching 24 the attorney database 2 and identifying 25 a selected attorney record 26 which has an attorney name 11 which matches the selected PCT attorney name 23. The next step involves identifying 27 the attorney address (13, 15) which corresponds to the selected attorney record 26 as a selected attorney address 28. In this way, the selected PCT application number 21 identifies an application which is publicly available and which has the opportunity of entering the national phase. By searching the attorney database for the attorney name which corresponds to the selected PCT attorney name, that attorney's corresponding address 28 is located. In the preferred embodiment, the selected attorney address 28 is either an email address 13 or a fax number.

The next step involves the document generator generating 29 a national phase filing invitation 30.

Figure 5 shows a first embodiment of the national phase filing invitation 30 according to the invention. As shown in that figure, the invitation 30 includes the selected PCT application number 21, a national phase entry due date 31 which corresponds to the selected PCT record 19, response information 32 and a number of links 33 to a national phase lodgment website 36. In this email form, the invitation 30 includes the selected attorney address 28 in the "TO" section of the email, the selected PCT application number 21 in the subject section of the email and invitation content 34 in the body section 35 of the email.

In this example, the invitation content 34 includes a reference to the national phase entry due date 31 of "27 February 2002". The invitation 30 also includes response information 32 which, in this case, provides the recipient with three possible responses, "Yes", "Maybe" and "No". This response information may be responded to by the recipient by clicking on the voting buttons, if they exist, or by clicking on the "Reply" button and entering the words "Yes", "Maybe" or "No" into the subject field, as appropriate. In this example the invitation 30 includes three links 33 to a national phase lodgment website 36. One of the links is an "About" link 37 which takes the user to a part of the website that tells the user about the firm providing the service of the present invention. A "How Much?" link 38 refers the user to a section of the website 36 which shows the cost of entering the national phase in the particular country/countries of interest. The invitation 30 also includes an "Enter National Phase" link 39 which takes the user to the part of the website 36 which allows them to check the details of the selected PCT application number 21 and to enter the national phase in one or more countries.

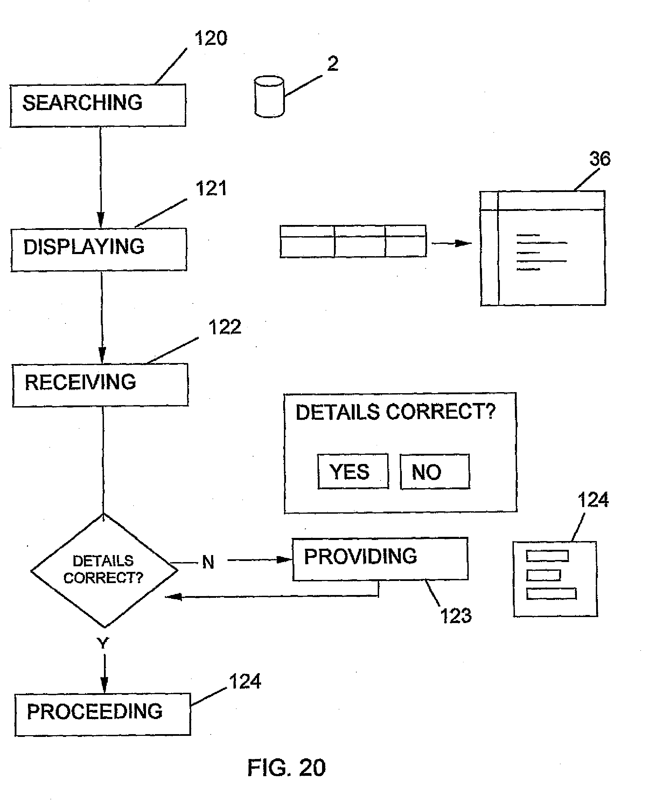

The invitation 30 shown in Figure 5 also includes user name information 54 which, in this case, is the selected PCT application number 21 and password information 55 which, in this example, is the selected attorney email address 28. This information is provided so that, when the attorney receiving the information wishes to go to the website and lodge the national phase application directly, they are able to do so in a secure manner without having to forward their reply in the form of an emailed response to the invitation 30. By having the user name information as the PCT application number and having the password information as the attorney's email address 28, this makes it very easy for the attorney to remember the user name and password. Although, if unconscionable third parties identify this pattern they will be able to enter the website 36 and provide instructions, such actions will be quickly found out, since any instructions are confirmed by email to the selected PCT attorney's address 28. If an attorney notices that they start receiving emails confirming instructions which they have not given, then the breach of security will be quickly identified. Further details about this process will be described with reference to figures 20 to 24.

Figure 6 shows a second embodiment of the national phase filing invitation according to the invention. This embodiment includes many of the features of the first embodiment and the respective portions are labelled with similar reference numbers. In this embodiment the link simply directs the instructing attorney to the national phase lodgment website where they can obtain further information about the service and enter the national phase in one or more countries of interest. Further embodiments of invitations are envisaged, including but not limited to emails with more or less information and faxes similar to these and other embodiments.

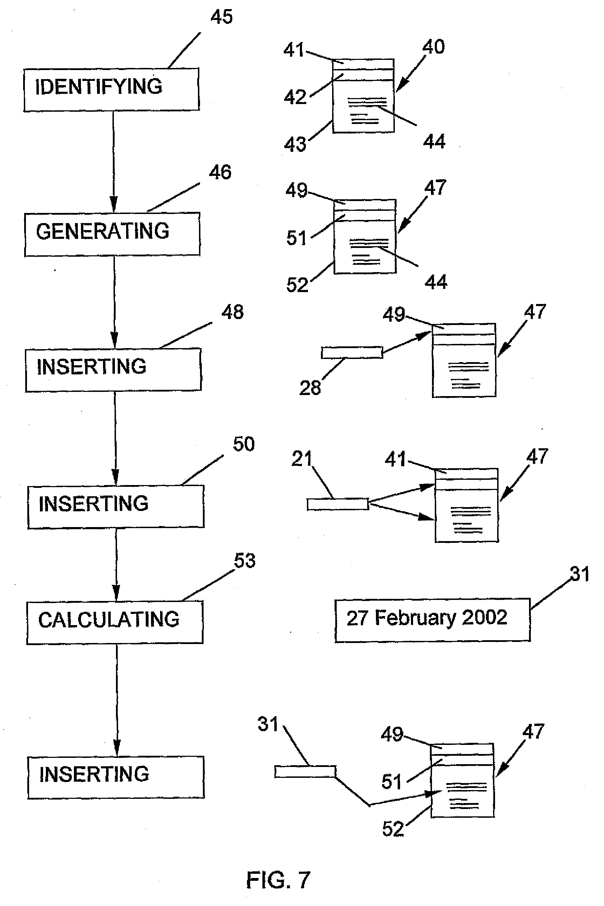

The step performed by the document generator of generating 29 the national phase filing invitation 30 is preferably achieved using the method illustrated in Figure 7. As shown in that figure, the method involves using an invitation template 40 which has been obtained from the document template database. The template includes an invitation address region 41, an invitation subject region 42, an invitation body 43 and standard text 44. The method then involves identifying 45 the invitation template 40 in the document template database, and generating 46 a new national phase filing invitation 47 resembling the template 40. The next step involves inserting 48 the selected attorney address 28 in the new invitation's address region 49. The next step involves inserting 50 the selected PCT application number 21 in the new invitation's subject field 51. The application number may also be included in the new invitation's body 5, in an appropriate section of the standard text 44 which was copied from the invitation template. The next step involves calculating 53 the national phase entry due date 31 from the selected PCT record's priority date 7. This national phase entry due date 31 will vary depending upon the country which the PCT application is entering. In the case of Australia, New Zealand and the European Union, a date thirty-one months after the priority date 7 would be the due date 31. In the case of countries such as the United States of America and Japan, the due date would be thirty months after the priority date 7. This, of course, assumes that the PCT application went through international preliminary examination in Chapter II of the PCT. In practice, the vast majority of PCT applications do enter Chapter II in order to obtain the greatest benefit from the PCT system. Whilst it is possible to send invitation reminders prior to the twenty and twenty-one month due dates for entering the national phase if a demand for international examination is not filed, such invitations would be less likely to be positively received, in light of this standard industry practice.

Returning to Figure 4, once the step of generating 29 the invitation 30 has been performed, the next step involves the document sender sending 56 the invitation 30 to the selected attorney address 28. When the invitation is an email, the document sender is an email program which sends the email invitation to the selected attorney's email address. Alternatively, if only a fax number is known, then the document sender employs its fax sending procedures to fax the invitation 30 to the instructing attorney's fax number. Alternative methods of sending the message 30 are also envisaged including but not limited to sending the invitation by post or SMS messaging. Accordingly, a number of variations of this first function of the computer system of the present invention are envisaged.

The second function of the computer system is to receive national phase filing instructions via a national phase lodgment interface, generate national phase filing messages using its document generator and send those messages to the patent office computers and faxes. In this way, the system automatically causes the PCT application to enter the national phase in the country of interest.

The inventor recognises that whilst the present invention is suitable for causing PCT applications to enter the national phase, requests examination, generate standard formality documents and the like, it is not suitable for the complex task of prosecuting patent applications. That is why, once the system has caused the PCT application to enter the national phase, it instructs a regular (prosecuting) patent attorney firm (of the instructing attorney's choosing) to continue the prosecution. So that the prosecuting attorney has all the information they need, the present invention also asks the local patent office to send the prosecuting attorney a copy of the PCT application's published specification and the IPER.

As a broad overview, this second function therefore involves 4 main steps:
Step1: The instructing attorney provides their details and the name of the prosecuting attorney they want to continue the national phase prosecution via the national phase lodgment interface;
Step 2: The document generator generates a national phase entry message and the document sender sends it to the relevant patent office along with a document request message asking for a copy of the published PCT specification and the IPER;
Step 3: The document generator generates a confirmation message and an invoice and the document sender sends them the instructing attorney's computer or fax machine;
Step 4: The document generator generates an instructing message and the document sender sends it to the prosecuting attorney's computer or fax machine asking them to continue the national phase prosecution and telling them that the patent office will be sending them a copy of the published PCT specification and the IPER.

This second function is described in detail below.

Referring to Figure 1, the interface program stored in the memory of the processing computer makes a national phase lodgment interface available to the instructing attorney computer via the network. In the preferred embodiment, the interface program is written in an internet compatible programming language and the national phase lodgment interface is an internet accessible web site. A variety of other types of progamming language and interface are also envisaged.

Figure 8 shows a first embodiment of the national phase lodgment interface according to the invention. As you can see, the interface has a first name field adapted to receive an instructor first name, a last name field adapted to receive an instructor last name and a firm name field adapted to receive an instructor firm name. It also has an email address field adapted to receive an instructor email address, a reference field adapted to receive an instructor reference and a PCT application identifier field adapted to receive a PCT application identifier. In this example, the PCT application identifier is the PCT application number, but it could also be the WIPO publication number.

The interface also has a number of country/region selection fields adapted to receive one or more country/region selections, which indicate which countries the instructing attorney wants the PCT application to enter the national phase in.

Each country/region selection field has a corresponding prosecuting attorney name field and a prosecuting attorney firm field which are adapted to receive a prosecuting attorney name and prosecuting attorney firm name respectively. By inserting the details of a prosecuting attorney in these fields, the instructing attorney is able to select the attorney/firm which they would like to continue the prosecution of the national phase application.

Figure 9 shows the process by which the computer system receives the national phase filing instruction via the national phase lodgment interface, generates the national phase filing message using the document generator and sends those messages to the patent office computers and faxes. The method first involves the step of receiving 126 a filing instruction 90 via the national phase lodgment interface 36

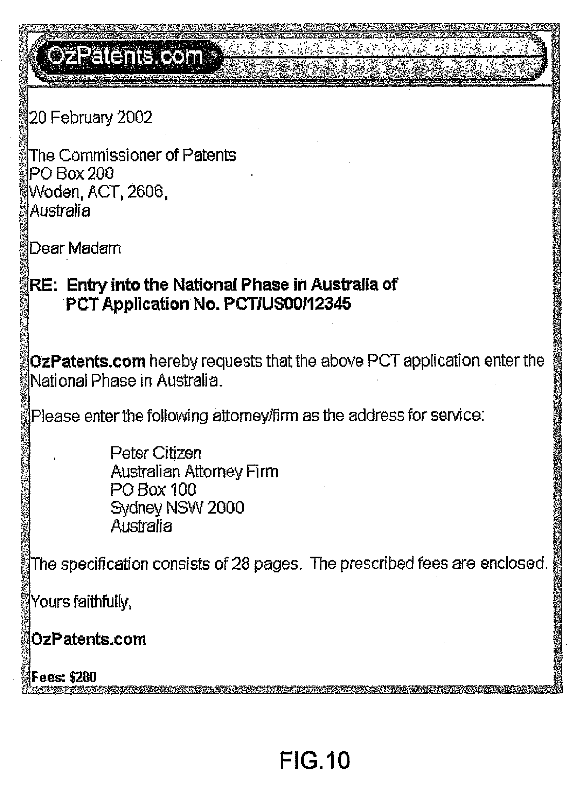

The next step involves the document generator generating 127 a new national phase filing message 77. This step is described in greater detail below with reference to Figure 10.

The next step involves the document sender sending 128 the message 77 to the computer or fax of the relevant patent office 129 by email or fax. This step may also include forwarding the message via EDI transfer, ordinary post or other sending methods.

Once the step of sending 128 the national phase filing message 77 to the patent office 129 has been performed, the method then involves a number of similar generating and sending steps. These include:
(a) generating and sending a confirmation message and an invoice to the instructing attorney's computer or fax machine;
(b) generating and sending a document request message to the patent office's computer or fax machine asking for a copy of the published PCT specification and the IPER; and
(c) generating and sending an instructing message to the prosecuting attorney's computer or fax machine asking them to continue the national phase prosecution and telling them that the patent office will be sending them a copy of the published PCT specification and the IPER.

Further generating and sending steps are also envisaged, depending upon the particular implementation of the present invention.

In the preferred embodiment described above, the filing instruction is received via the lodgment interface. In alternative embodiments, the filing instruction may be received in electronic form, such as via an emailed response to a national phase filing invitation. In such an embodiment a number of intermediate steps are involved. Once the email reply is received, the next step involves confirming that the reply is a filing instruction. For example, a reply email which is a filing instruction may have the word "Yes" in its subject region. The system detects the presence of the word "Yes" in the subject field and determines that it is a filing instruction.

Once this step has been performed, the next step involves identifying the selected PCT application number 21 corresponding to the reply. This will involve searching the subject region and/or the body region for a string that begins "PCT" and has fourteen characters. If the filing instruction 60 is simply a reply to the invitation 30 illustrated in Figure 5, then the selected PCT application number 21 should appear in the subject field. However, given the different methods by which attorneys may reply to the invitation, the application number 28 may appear elsewhere and an appropriate method of locating the selected PCT application number should be used.

Once the relevant information is identified, the document generator then generates the national phase entry message and the document sender sends it to the relevant patent office computer or fax machine.

If the interface program is located on a separate computer from the document generator program, the interface program just receives the filing instruction and sends an electronic filing instruction to the document generator which generates the relevant documents and sends them using the document sender. An example electronic filing instruction is shown in Figure 18.

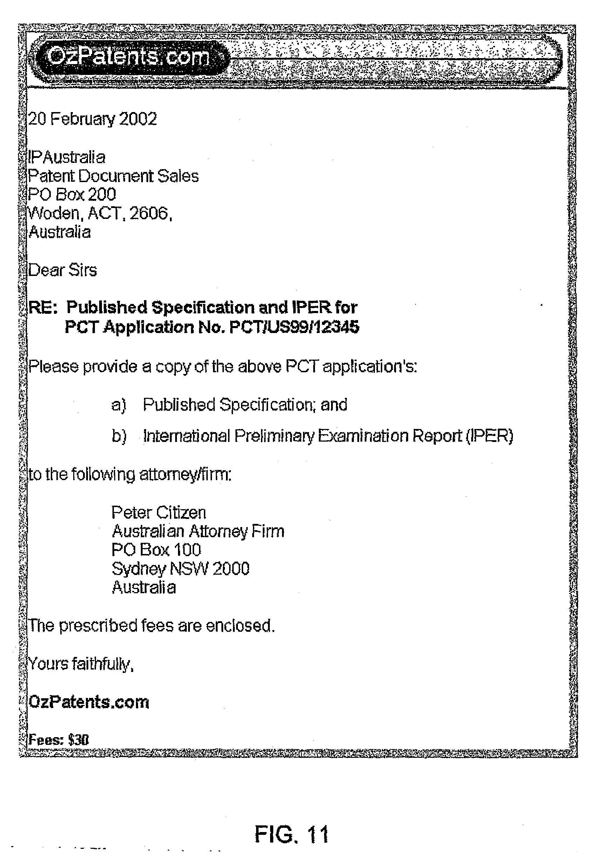

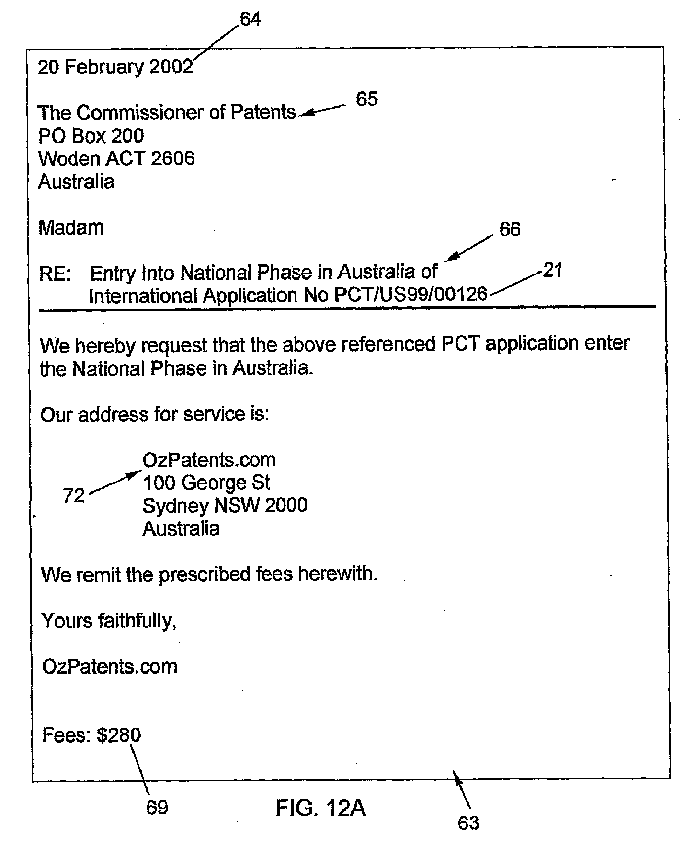

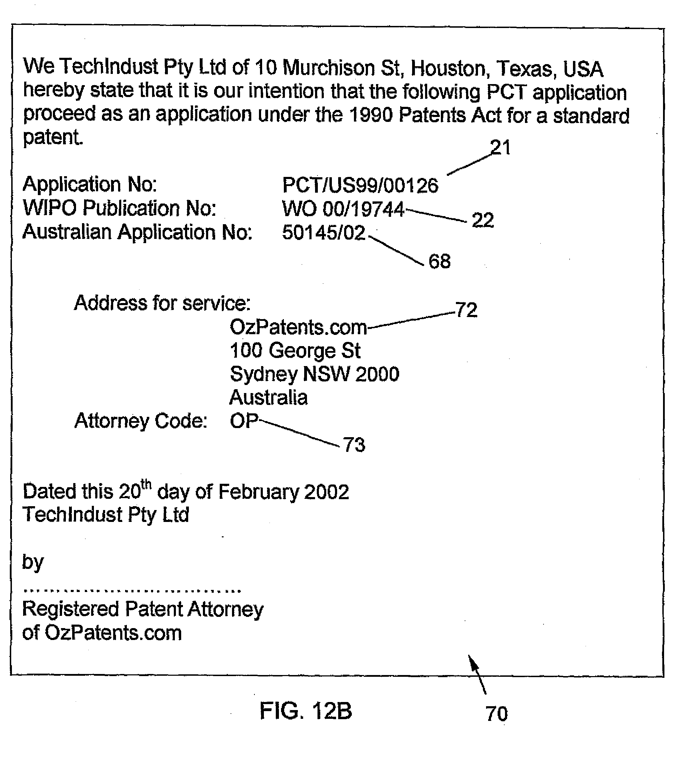

Figure 10 shows a first embodiment of the national phase entry message according to the invention. Figure 11 shows a first embodiment of a document request message according to the invention. Figures 12A and 12B show two parts of a second embodiment of the national entry message according to the invention. Figure 13 shows a first embodiment of a confirmation message according to the invention. Figure 14 shows a second embodiment of the confirmation message according to the invention. Figure 15 shows an example invoice according to the invention. Figure 16 shows a prosecuting attorney instructing message invoice according to the invention.

Each of these messages and documents are generated by the document generator which selects the relevant message templates from the document template database and inserts the relevant information.

A specific detailed explanation of this process appears below with reference to Figure 17. Referring to that figure, the method involves identifying 75 the message template 74 in the document template database and generating 76 a new national phase entry message 77 resembling the template 74. The next step involves inserting 153 at least the selected PCT application number 21 into the new message 77. Additional information such as the applicant name 67, the applicant address 71, the publication number 22 and the national phase application number 68 may also be added. The next step involves calculating 78 the filing fee cost 79. In most countries, the filing fee cost 79 is calculated with reference either to the number of pages or claims included in the specification corresponding to the application. If the number of pages or claims is not available from the PCT application database, then this information should be received via the lodgment interface. In an alternative embodiment, some patent offices accept national phase applications without fees or with incorrect fees and later issue an invoice for the remaining amount. In this way, the basic fee may be lodged and the additional page fee may be paid later. These and other approaches to fee calculation and payment are envisaged.

The next step involves inserting 80 the filing fee cost 79 into the new message 77 to create a new national phase filing message which includes all the information needed for entering the national phase.

As mentioned above, Figure 10 shows the first embodiment of the national phase entry message. In this first embodiment a prosecuting attorney is used to continue the national phase prosecution and the message advises the patent office of their address for service.

Figures 12A and 12B show the second embodiment in which the attorney firm which files the application (OzPatents.com in this case) also continues the national phase prosecution. A detailed description of this second embodiment appears below.

The second embodiment of the national phase entry message 63 is shown in Figures 12A and 12B. That message 63 includes a date 64, the address of the relevant patent office 65 and a subject region 66 which includes at least the selected PCT application number 21. In another embodiment, the subject region 66 may also include additional information such as the applicant's name 67, the corresponding national phase application number 68 and an attorney's reference 69. The national phase entry message 63 also includes filing fee information 69. As shown in Figure 12B the message may also include a notification page 70 which includes the applicant name 67, the applicant's address 71 and the WIPO publication number 72 corresponding to the PCT application number 21. The notification may also repeat the national phase application number 68. The notification 70 also includes an address for service 72 and, in this case, an attorney code 73.

The national phase entry message 63 may be generated in a number of formats including but not limited to email format, facsimile format, letter format or some other electronic format. The format and content of the message 63 will primarily be determined by the requirements of the particular patent office. If the patent office has specific electronic filing format requirements, then the step of generating 64 the message 63 should be conducted in accordance with those requirements.

As mentioned above, Figures 13 and 14 shows first and second embodiments of the confirmation message 131 according to the invention. As seen in Figure 14, the second embodiment of the filing confirmation message includes at least the particular PCT application identifier 84. In other embodiments, the message may include additional application information, taken from the particular PCT record 87. It should be noted that the example message shown in Figure 14 also includes the national phase application number 133 corresponding to the particular PCT identifier 84. In some countries, such as Australia, the local patent office allocates national phase application numbers as soon as the filing of the PCT application is reported to them. In this second embodiment, the method of sending the national phase entry message to the patent office's computer or fax machine includes the additional step of searching the patent office database in order to identify the corresponding national phase identification number and including it in the confirmation message 131 which is generated by the document generator and forwarded to the instructing attorney by the document sender.

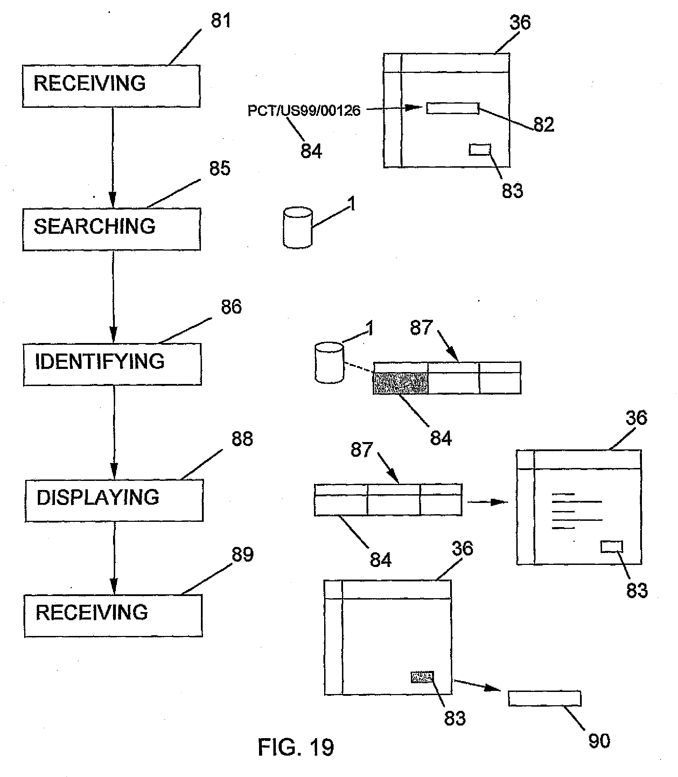

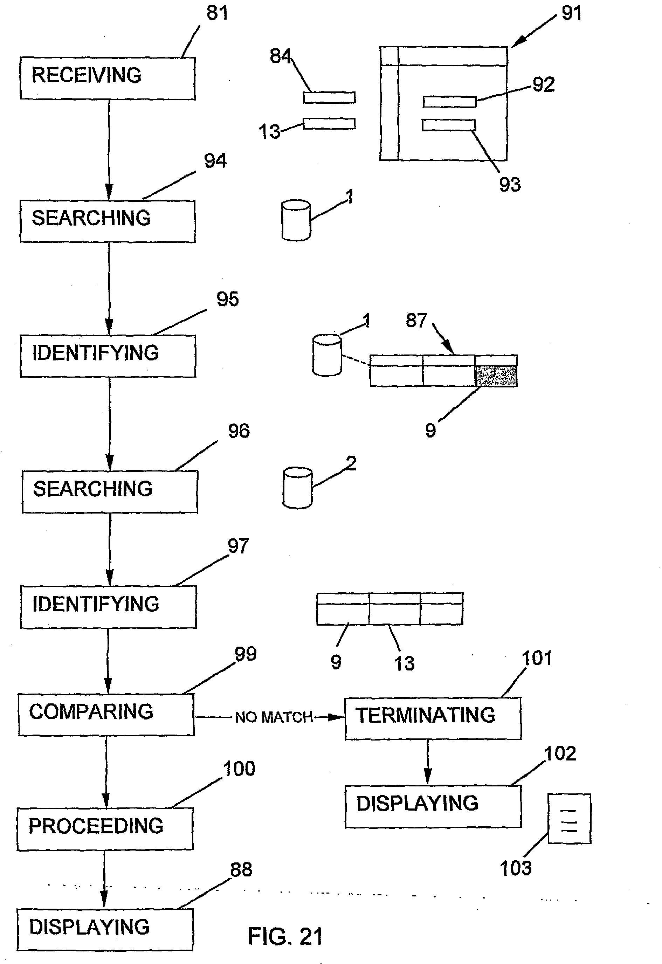

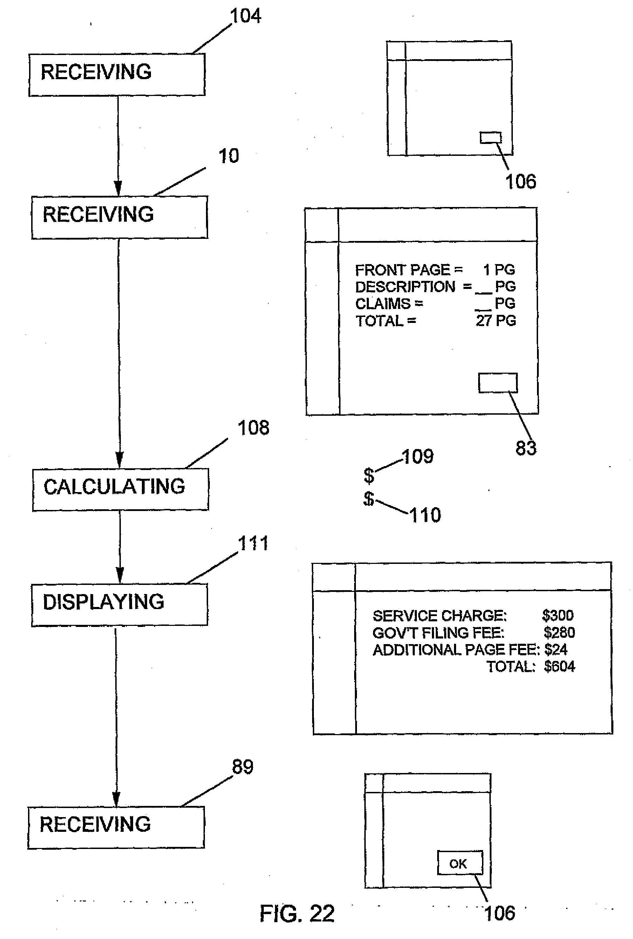

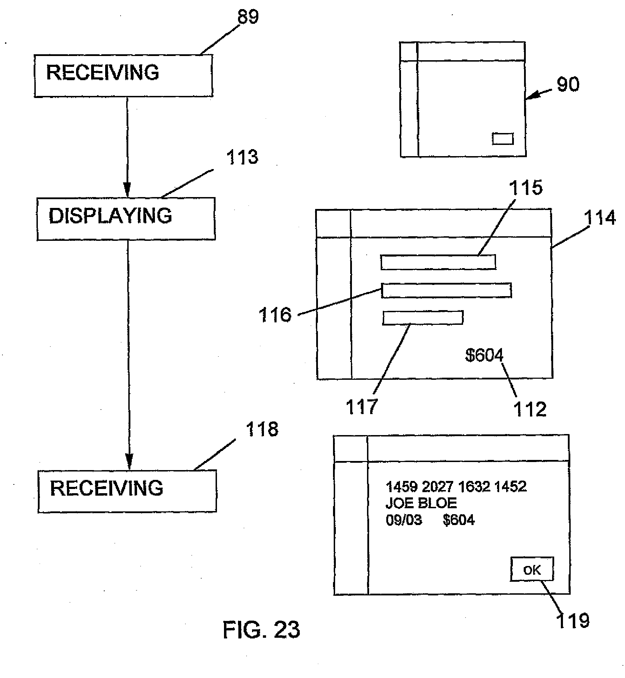

The first embodiment of the national phase lodgment interface was described above with reference to Figure 8. A second embodiment is also envisaged which has a number of additional features. This second embodiment allows an instructing attorney to:
(a) view the PCT application's bibliographic details (obtained from the PCT database) and confirm that those details are correct (Figure 19);
(b) view their own details (obtained from the attorney database) and confirm that those details are correct (Figure 20);
(c) enter a login and password so that their filing instructions are received in a secure manner (Figure 21);
(d) view the cost of the services in more details (Figure 22); and
(e) pay for the services online by credit card (Figure 23).

Referring firstly to Figure 19, the second embodiment of the lodgment interface receives PCT national phase application filing instructions using a number of steps. The first step involves receiving 81 a particular PCT application identifier 84 from the instructing attorney via a PCT application identifier receiving field 82. The identifier may be either the PCT application number or the WIPO publication number. The receiving field may be adapted to accept either or both identifiers.

The next step involves searching 85 the PCT database 1 and identifying 86 the particular PCT record 87 corresponding to the particular PCT application identifier 84. In this way, the system is able to locate all the relevant information stored in the PCT database 1 about the application in question.

The next step involves displaying 88 at least part of the particular PCT record 87 on the website 36. In one embodiment, the displaying step involves displaying the PCT application number, the WIPO publication number, the title, the applicant name, the abstract and one of the figures. In other embodiments, the entire specification may be available for viewing on the website 36. Depending upon the particular implementation, different information extracted from the particular PCT record 87 may be displayed.

The next step involves receiving 89, a filing instruction 90 corresponding to the particular PCT record 87. This step will usually involve receiving confirmation from the attorney that the information displayed is correct and that they wish to continue with filing the national phase application. This will, in one embodiment, involve the attorney clicking on the filing instruction confirmer 83 which may simply be a "File Application" button. In this way, the system receives a PCT identifier 84 from the author, searches the database 1 to identify the particular PCT record 87 involved, displays 88 that information and receives 89 a confirmation from the author that they wish to file the national phase patent application.

An additional feature of this second interface embodiment also includes steps which allow the instructing attorney to confirm the accuracy of the information stored in the attorney database 2 about that attorney, or to correct any details about that attorney if they have changed. As illustrated in Figure 20, having received the PCT identifier and other security information, the method involves searching 120 the attorney database 2 to identify the attorney record corresponding to the instructing attorney. The next step involves displaying 121 at least part of the instructing attorney record on the website 36 and receiving 122 confirmation or denial of the accuracy of the instructing attorney record from the instructing attorney. If a denial is received, the method involves the step of providing 123 a record amendment screen 124 to enable the instructing attorney to provide the correct attorney information which is then updated to the attorney database 2. In the case of a confirmation that the details are correct, the next step involves proceeding 125 with the next step in the process.

This second interface embodiment includes the steps illustrated in Figure 21. As shown in that figure, a number of safety steps are taken in order to ensure that the person providing the instructions via the website is the attorney responsible for the application. As shown in that figure, the step of receiving 81 the particular PCT application identifier 84 from the instructing attorney via the PCT application identifier receiving field 82 includes the additional step of confirming the identity of the instructing attorney. The step of confirming the identity of the instructing attorney includes receiving security information from the attorney via a log-in screen 91. As shown, the log-in screen 91 includes a log-in receiving field 92 and a password receiving field 93. In the preferred embodiment, the log-in receiving field and the PCT application identifier receiving field 82 are one and the same, in that the attorney's log-in is actually the PCT application identifier. In this embodiment, the password receiving field 93 is intended for receipt of the instructing attorney's email address 13. In this way, the instructing attorney can readily remember their log-in and their password and there is no need for the attorney to enter the identifier 84 and their email address as well as their log-in and their password. Although there may be some safety concerns with this approach, if the person providing the information is not the responsible attorney, they will either not be allowed into the system, or any instructions they provide will be confirmed to the instructing attorney's email address. This will become clearer from the following descriptions of the steps involved.

Following the step of receiving 81 the security information via the log-in receiving field 92 and the password receiving field 93, the searching program performs a number of steps. The first step involves searching 94 the PCT database 1 and identifying 95 the particular PCT record 87 and the attorney name 9 corresponding to that particular record. The attorney name identifies the responsible attorney who filed the PCT application. It is this attorney, or this attorney's firm, from whom instructions may be validly received. The next step involves searching 96 the attorney database 2 and identifying 97 and a particular attorney record 98 having an attorney name 11 which matches the attorney name 9 found in the PCT database 1. This identifying step 97 also involves identifying that attorney's email address 13. The next step involves comparing 99 the attorney email address 13 with the address provided in the password receiving field 93. If the addresses match, the next step involves proceeding 100 with the transaction and displaying 88 at least part of the PCT record 87 on the website 36. If, however, the email addresses do not match, the next step involves terminating 101 the transaction and displaying 102 a rejection message 103 on the website 36. In this way, a security layer is placed which is easy to use and ensures that the instructing attorney is the attorney on the PCT record having responsibility for the application. In some cases, the attorney providing the instructions may be a different individual attorney, but may work for the same firm that originally filed the application. In such a case, an adjustment may be made to the comparison step, which involves only checking those characters of the supplied email password which follow the '@' character. For example, the responsible attorney who initially filed the PCT application could have an email address of "JBloe@patents.com". However, his associate, who has the email address "RSmith@patents.com" could be providing the national phase filing instruction. By using this format of password any person from the responsible firm may provide the filing instructions since they will usually have an email address which has the same characters following the @ symbol.

Turning now to Figure 22, using the second embodiment of the interface involves the further step of receiving additional application information from the instructing attorney. This involves receiving 104 a continuation instruction 105 via a continue button 106. In this way, rather than instructing the system to file the application, the attorney instructs the system to go to the next stage in order to allow the additional information to be entered. The next step therefore involves receiving 107 additional information via the website 36. In this example, the number of pages of the specification and the number of claims is received. This is because, in many countries, the number of pages and/or claims affects the cost of filing the national phase application. It is therefore desirable to provide a page which allows the instructing attorney to provide this information. Naturally, if this information is already included in the PCT application 1, then this receiving step may be omitted. As seen from Figure 8, the first embodiment of the interface allows the instructing attorney to provide the number of pages in the first page of the interface. A variety of arrangements of information receiving fields are envisaged.

The next step involves calculating 108 the filing fee cost 109 and service charges 110. The next step involves displaying 111 the service charges 110 along with the government filing fee cost 109 and any government fees for any additional pages or claims, along with a total cost 112. The next step involves receiving 89 a filing instruction 90 via the confirmer 83 in a similar way to that described above. In this way, not only are the application details checked and confirmed, but the cost of filing the application is also calculated, and the attorney can then confirm that the filing should still take place.

An additional set of steps involved in the operation of this second interface embodiment are illustrated in Figure 23. As shown in that figure, the step of receiving 89 the filing instruction 90 is followed by the additional step of displaying 113 a payment receiving form 114 on the website 36. Typically, this form will take the form of a credit card payment receiving form. Alternative embodiments are also envisaged including, but not limited to, bank account detail receiving form, or corresponding smartcard and smartcard reader detail receiving forms.

In this example, the payment receiving form 114 includes a card number receiving field 115, an account name receiving field 116, an expiry date receiving field 117 and the total cost 112. The method then involves receiving 118 the payment details in the relevant fields along with a confirmation instruction 119. In this way, the system receives attorney-supplied payment information and a confirmation instruction which authorises the system to debit the instructing attorney's credit card by the total cost 112.

The third function of the computer system is to generate formality documents such as Notice of Entitlement forms and Authorisation of Agent forms via the national phase lodgment interface. The interface receives information from the instructing attorney, generates the form and sends it to the attorney. In one embodiment, the system also sends two covering letters. One to the attorney, explaining how the form should be signed or filled in. The other letter is also sent to the attorney, but is addressed to the patent office, the purpose being that once the form has been duly signed, the attorney can send it directly to the patent office under cover of the letter generated by this system.

Although the following description will refer to a notice of entitlement suitable for filing in Australia, similar types of formal document required by other patent offices may also be produced using the same method.

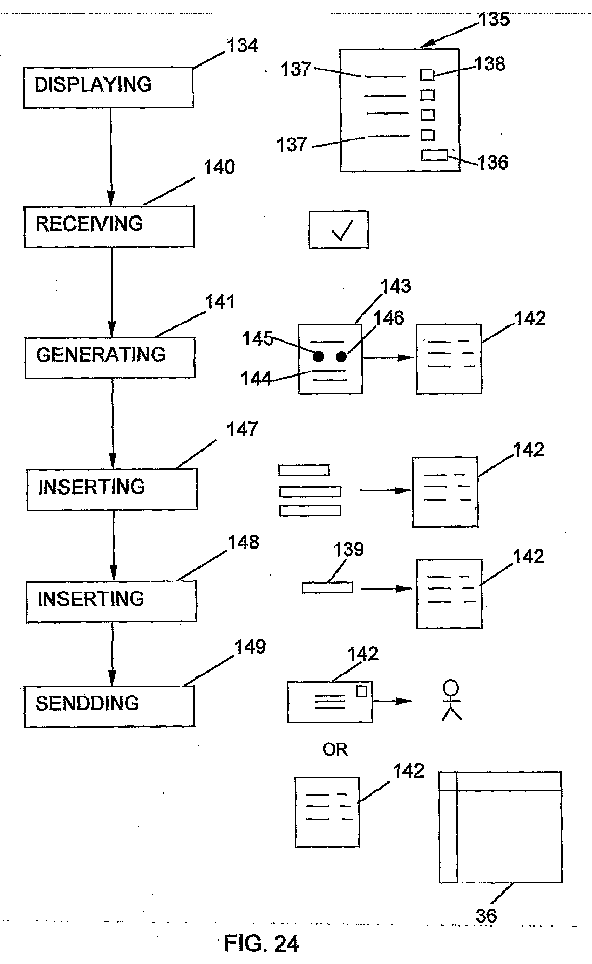

In Australia, a Notice of Entitlement form identifies the reasons by which the applicant of the national phase application has entitlement to the invention from the inventors, and from the applicant of the priority document. As illustrated in Figure 24, the method of generating such a notice of entitlement form involves a number of steps. This first step involves displaying 134 an instruction receiving interface 135 on the interface/website 36. An example interface 135 is shown in detail in Figure 25. That interface includes an initiator 136, a number of phrases 137 and a number of check boxes 138 such that each phrase has a number of corresponding selectable check boxes 138 adjacent to it. Each of the check boxes 138 has a corresponding response text 139.

Returning to Figure 24, once the step of displaying 134 the interface 135 has been performed, the next step involves receiving 140 an instructing attorney-supplied selection of one of the selectable response check boxes 138 for each phrase 137. In the example shown in Figure 25, the phrase "Does the applicant have entitlement to the invention by virtue of" has three check boxes having response texts 139 of "an assignment", "contract of employment", and "other". This allows the instructing attorney to confirm the means by which the applicant has entitlement to the invention.

Returning to Figure 24, the next step involves the document generator generating 141 a new Notice of Entitlement form 142 resembling a notice of entitlement form template 143. The template 143 includes standard text 144, database retrieved information insertion points 145 and response text insertion points 146 and is stored in the document template database. Once the new form 142 has been generated, based on the template 143, the next step involves inserting 147 the particular PCT application identifier 84, the particular applicant name and the particular applicant address into the database retrieved information insertion points 145. In this way, all of the relevant details about the application are included in the new form 142.

The next step involves inserting 148 the response text 139 corresponding to each of the selected check boxes 138 in the response text insertion points 146. At the end of these steps, a new notice of entitlement form 142 will be produced which has all the information of the application, along with the appropriate response information entered into it.

The next step involves the document sender sending 149 the completed form 142 to the instructing attorney. In the preferred embodiment this is done by forwarding the form 142 as an attachment to an email, addressed to the attorney's email address. Alternatively, the new form may be displayed on the website 36 or sent to them via fax or other known document sending method. In this way, the instructing attorney may easily generate a notice of entitlement form appropriate to the application via the website, without having to get the prosecuting attorney to prepare the document.

In addition, the instruction initiator 136 on the interface 135 is a button which is marked "continue" or "go" or, in the example of Figure 25, "generate notice of entitlement form", such that when the button is pressed, the step of generating 141 the new form 142 is performed.

It will be appreciated from the foregoing discussion that the present invention provides a method for identifying and attracting a potential PCT national phase application in an automated way using a PCT application database and an attorney database. Once that potential application is identified and the relevant instructing attorney has been sent a national phase filing invitation, the present invention also provides a method for receiving a PCT national phase filing instruction by either email or via the national phase entry website 38. Whether the filing instruction is received via email or via an instruction from the website, the present invention also provides a method of automatically filing the particular PCT national phase application with a local patent office using a national phase entry message template and a particular method of generating a national phase filing message. As part of the filing process, or as an additional aspect, the present invention provides a method for generating any formal documents required by the patent office using the website. In this way, a PCT national phase application may be attracted and filed in an automated way.

Although the invention has been described with reference to specific examples, it will be appreciated by those skilled in the art that the invention may be embodied in many other forms.
Prepared this 23rd Day of October 2001
for JUSTIN RYAN SIMPSON
by JUSTIN RYAN SIMPSON
Registered Patent Attorney (Australia and New Zealand)

## Claims

1. A method of receiving a PCT national phase application filing instruction via a national phase lodgment website;
wherein said website includes a PCT application identifier receiving field and a filing instruction confirmer and is in communication with a PCT application database;
wherein said PCT application database includes a plurality of PCT application records, each PCT record including a PCT application identifier, applicant information and an invention title;
and wherein the method includes the steps of:
(a) receiving a particular PCT application identifier from an instructing attorney via said PCT application identifier receiving field;
(b) searching said PCT application database;
(c) identifying said particular PCT record corresponding to said particular PCT application identifier;
(d) displaying at least part of said particular PCT record on said website;
and
(e) receiving a particular PCT national phase application filing instruction via said filing instruction confirmer.

2. A method according to claim 1 wherein the step of receiving said particular PCT application identifier from said instructing attorney via said PCT application identifier receiving field includes the additional step of confirming the identity of said instructing attorney.

3. A method according to claim 2 wherein the step of confirming the identity of said instructing attorney includes receiving security information from said attorney via a login screen.

4. A method according to any one of claims 1 to 3 wherein the method includes the further step of receiving additional application information from said instructing attorney.

5. A method according to claim 4 wherein said additional application information includes information relating to said number of pages of a particular complete specification which corresponds to said particular PCT application.

6. A method according to any one of claims 1 to 5 including the further step of displaying cost information via said national phase lodgment website.

7. A method according to claim 6 wherein said cost information includes information relating to one or more of:
(a) Service charges for filing said PCT national phase application;
(b) National Phase government filing fees; and
(c) Government fees for additional specification pages or claims above a predetermined page number or claim number.

8. A method according to any one of claims 1 to 7 wherein said website is in communication with an attorney database which includes a plurality of attorney records, each attorney record including an attorney name and attorney address information, and wherein the method includes the further steps of:
(a) searching said attorney database to identify said attorney record corresponding to said instructing attorney;
(b) displaying at least part of said instructing attorney record on said website; and
(c) receiving confirmation or denial of said accuracy of said instructing attorney record from said instructing attorney.

9. A method according to claim 8 wherein the step of receiving said denial of said accuracy of said instructing attorney record is followed by the step of providing a record amendment screen adapted for amending said instructing attorney record stored in said attorney database.

10. A computer system for lodging a PCT national phase application with a patent office comprising:
(a) an interface adapted to receive a national phase filing instruction, in communication with;
(b) a document generator adapted to generate a national phase entry message, in communication with;
(c) a document sender adapted to send said national phase entry message to said patent office;
wherein, when the interface receives a national phase filing instruction the document generator generates the national phase entry message and the document sender sends the message to the patent office thereby lodging the PCT national phase application.

11. A computer system according to claim 10 wherein said interface comprises one or more of:
(a) PCT application identifier receiving means adapted to receive a PCT application identifier;
(b) country/region selection means adapted to receive one or more country/region selections;
(c) prosecuting attorney selection means adapted to receive one or more prosecuting attorney selections; and
(d) instructing attorney information receiving means adapted to receive instructing attorney information;
and said national phase filing instruction comprises one or more of:
(a) a PCT application identifier;
(b) one or more country/region selections;
(c) one or more prosecuting attorney selections; and
(d) instructing attorney information.

12. A computer system according to claim 11 wherein said PCT application identifier comprises one or more of:
(g) a PCT application number; and
(h) a WIPO publication number.

13. A computer system according to claim 11 or claim 12 wherein said one or more country/region selections comprise the selection of any PCT country or region.

14. A computer system according to any one of claims 11 to 13 wherein said prosecuting attorney selections include the selection of any prosecuting attorney firm or prosecuting attorney qualified to prosecute patent applications before a patent office.

15. A computer system according to claim 13 or claim 14 wherein each country/region selection means has a corresponding prosecuting attorney selection means.
